# EUROPÄISCHE PATENTSCHRIFT

(11) **EP 0 943 129 B1**
(45) Veröffentlichungstag und Bekanntmachung des Hinweises auf die Patenterteilung: **02.07.2003**
(21) Anmeldenummer: 97952730.6
(22) Anmeldetag: 09.12.1997
(51) Int. Cl.: G06F 15/78, G06F 9/30, G06F 9/302

(54) **EINHEIT ZUR VERARBEITUNG VON NUMERISCHEN UND LOGISCHEN OPERATIONEN, ZUM EINSATZ IN PROZESSOREN (CPUs), MEHRRECHNERSYSTEMEN**
UNIT FOR PROCESSING NUMERIC AND LOGICAL OPERATIONS, FOR USE IN PROCESSORS (CPUS) AND IN MULTICOMPUTER SYSTEMS
UNITE DE TRAITEMENT D'OPERATIONS NUMERIQUES ET LOGIQUES, POUR UTILISATION DANS DES PROCESSEURS (CPUS) ET DES SYSTEMES MULTI-ORDINATEURS

(30) Priorität: 09.12.1996 DE 19651075
(43) Veröffentlichungstag der Anmeldung: 22.09.1999
(60) Teilanmeldung: 02028401.4
(73) Patentinhaber: PACT XPP Technologies AG, 80939 München (DE)
(72) Erfinder: VORBACH, Martin, D-76149 Karlsruhe (DE); MÜNCH, Robert, D-76149 Karlsruhe (DE)
(74) Vertreter: Pietruk, Claus Peter, Dipl.-Phys.
(86) Internationale Anmeldenummer: DE9702949
(87) Internationale Veröffentlichungsnummer: WO98026356

(56) Entgegenhaltungen:
- EP-A- 0 735 685
- US-A- 5 336 950
- US-A- 5 430 687
- MAXFIELD C: "Logic that mutates while-u-wait" EDN (EUR. ED.) (USA), EDN (EUROPEAN EDITION), 7 NOV. 1996, CAHNERS PUBLISHING, USA, Bd. 41, Nr. 23, ISSN 0012-7515, Seiten 137-140, 142, XP002064224

## Beschreibung

### 1. Hintergrund der Erfindung

### 1.1 Stand der Technik

In der Offenlegungsschrift DE 44 16 881 A1 ist ein Verfahren zur Verarbeitung von Daten beschrieben. Dabei werden in ihrer Funktion und Vernetzung weitgehend frei konfigurierbare, homogen angeordnete Zellen verwendet.
Unabhängig von der erwähnten Offenlegungsschrift werden zunehmend FPGA-Bausteine (frei programmierbare Logikbausteine) verwendet, um Rechenwerke und Datenverarbeitungseinrichtungen aus einer Vielzahl einzelner Logikzellen aufzubauen.
Ein weiteres bekanntes Verfahren ist der Aufbau von Datenverarbeitungseinrichtungen aus festen, programmgesteuerten Rechenwerken mit weitgehend fester Vernetzung, sogenannten systolischen Prozessoren.

### 1.2 Probleme

### 1.2.1 Bausteine nach DE 44 16 881 A1

Bausteine nach dem in DE 44 16 881 A1 beschriebenen Verfahren (im folgenden VPUs genannt) sind aufgrund der hohen Zahl kleiner Logikzellen sehr aufwendig zu konfigurieren. Zur Steuerung einer Logikzelle sind mehrere Steuer-Bit in einem statischen Speicher (SRAM) anzugeben. Für jede Logikzelle existiert eine SRAM-Adresse. Die Zahl der zu konfigurierenden SRAM-Zellen ist sehr hoch, was zu einem erheblichen Platzbedarf und Zeitaufwand für die Konfiguration und Umkonfiguration eines solchen Bausteines führt. Der hohe Platzbedarf ist besonders unangenehm, da die Verarbeitungsleistung einer VPU mit steigender Zahl der Zellen zunimmt. Jedoch ist die verwendbare Fläche eines Bausteines durch die Chipfertigungstechnologien begrenzt. Der Preis eines Chips steigt etwa quadratisch zur Chipfläche. Aufgrund der mehrfach abgebildeten Next-Neighbour Vernetzungsstruktur ist ein Broadcast, also das Senden von Daten an mehrere Empfänger gleichzeitig, unmöglich. Sollten VPUs im Betrieb umkonfiguriert werden, ist es zwingend erforderlich kurze Umkonfigurationszeiten zu erreichen. Dagegen steht jedoch die große Anzahl an Konfigurationsdaten die benötigt werden, um den Chip umzukonfigurieren. Es existiert keine Möglichkeit Zellen von der Versorgungsspannung zu trennen oder langsamer zu takten, um die Verlustleistung zu minimieren.

### 1.2.2 FPGAs

Für den beschriebenen Einsatzbereich interessante FPGAs bestehen zumeist aus Multiplexer oder Look-Up-Table (LUT) Strukturen. Zur Implementierung werden SRAM-Zellen eingesetzt. Aufgrund der Vielzahl an kleinen SRAM-Zellen sind sie sehr aufwendig zu konfigurieren. Es sind große Datenmengen erforderlich, die einen entsprechend großen Zeitaufwand zum Konfigurieren und Umkonfigurieren erfordern. SRAM-Zellen benötigen sehr viel Platz. Jedoch ist die verwendbare Fläche eines Bausteines durch die Chipfertigungstechnologien begrenzt. Der Preis steigt auch hier etwa quadratisch zur Chipfläche. SRAM basierende Technologie ist durch die Zugriffszeit auf den SRAM langsamer als direkt integrierte Logik. Obwohl viele FPGAs auf Busstrukturen aufbauen, sind keinerlei Broadcast-Moglichkeiten zum schnellen und effektiven Senden von Daten an mehrere Empfänger gleichzeitig gegeben. Sollen FPGAs im Betrieb umkonfiguriert werden, ist es zwingend erforderlich kurze Konfigurationszeiten zu
erreichen. Dagegen steht jedoch die große Anzahl an Konfigurationsdaten die benötigt werden. FPGAs bieten keinerlei Unterstützung für eine sinnvolle Umkonfigurierung im Betrieb. Der Programmierer hat dafür zu sorgen, daß der Vorgang ordentlich ohne störende Einflüsse auf Daten und umgebende Logik abläuft. Eine intelligente Logik zum Minimieren der Verlustleistung ist nicht vorhanden. Es bestehen keine speziellen Funktionseinheiten, die eine Rückmeldung der internen Betriebszustände an die das FPGA steuernde Logik ermöglichen.

### 1.2.3 Systolische Prozessoren

Bei systolischen Prozessoren entfällt die Umkonfigurierung komplett, jedoch sind diese Prozessoren unflexibel, da sie einen starren internen Aufbau besitzen. Befehle werden in jedem Zyklus neu dekodiert. Wie bereits in der beiden vorherigen Abschnitten beschrieben fehlen Funktionen, die ein Broadcasting oder die effiziente Minimierung der Verlustleistung beeinhalten.

### 1.3 Verbesserung durch die Erfindung, Aufgabe

Die der Erfindung zugrundeliegende Aufgabe besteht darin, einen rekonfigurierbaren Prozessor, der flexibel in seiner Funktion und Vernetzung konfigurierbar ist, bereitzustellen.
Diese Aufgabe wird durch die Merkmale des Anspruchs 1 sowie durch ein Vefahren gemäß Anspruch gelöst.

Die programmierbare Recheneinheit benötigt während der Ausführung des Algorsithmus keine Befehlsdekodierung. Sie ist im Betrieb umkonfigurierbar, ohne Einfluß auf die umgebenden Rechenwerke, Verarbeitungsmodule und Datenstrome zu haben. Die Menge der Konfigurationsdaten ist sehr klein, was sich günstig auf Platzbedarf und Konfigurationsgeschwindigkeit auswirkt. Um große Datenmengen schnell und effizient zu verteilen, wird Broadcasting über die internen Bussysteme unterstützt. Die programmierbare Recheneinheit ist mit einer Stromsparfunktion ausgestattet, wodurch die Stromaufnahme komplett ausgeschaltet wird, ebenso existiert ein Taktteiler, der es ermöglicht sie mit einem geringeren Takt zu betreiben. Für Rückmeldungen der internen Zustände an die externen Steuerungen stehen besondere Mechanismen zur Verfügung.

### 2. Beschreibung der Erfindung

### 2.1 Übersicht über die Erfindung, Abstrakt

Die Erfindung beschreibt den Aufbau einer Zelle für Bausteine nach DE 44 16 881 A1, systolische Arrays, DPGAs, FPGAs, o.ä.. In diese Zelle integriert ist eine um Sonderfunktionen erweiterte Arithmetisch-Logische-Einheit (EALU), die die Datenverarbeitung durchführt. Die EALU wird über ein Funktionsregister konfiguriert, dadurch sinkt die für die Konfiguration erforderliche Datenmenge erheblich. Die Zelle ist über ein Bussystem frei kaskadierbar, dabei ist die EALU vom Bussystem über Ein- und Ausgaberegister entkoppelt. Die Ausgaberegister sind auf einen Eingang der EALU zurückgeführt um serielle Operationen zu ermöglichen. Die Aufschaltung auf den Bus übernimmt eine Bussteuereinheit, die den Bus entsprechend dem Busregister vernetzt. Dabei ist die Einheit so konzipiert, daß das Verteilen von Daten an mehrere Empfänger (Broadcasting) möglich ist. Eine Synchronisationsschaltung steuert den Datenaustausch zwischen mehreren Zellen über das Bussystem. Die EALU, die Synchronisationsschaltung, die Bussteuereinheit und die Register sind so gestaltet, daß eine Zelle unabhängig von ihren Umgebungszellen im Betrieb umkontiguriert wender kann. Über das Funktionsregister kann ein Stromsparmodus konfiguriert werden, der die Zelle abschaltet, ebenfalls können Taktteiler eingestellt werden, die die Arbeitsfrequenz verringern.

### 2.2 Detailbeschreibung der Erfindung.

Die Erfindung beschreibt den Aufbau einer Zelle (PAE=Processing Array Element) im Sinne von DE 44 16 881 A1 oder bekannter FPGA Zellen, dabei sind die PAEs zu einem Array (Processing Array = PA) kaskadierbar. Eine PAE ist aus einer Vielzahl von Funktionseinheiten aufgebaut:

### 2.3 EALU

Das Rechenwerk besteht aus einer fest in Logik implementierten erweiterten Arithmecisch-Logischen-Einheit (EALU). Eine EALU ist eine gewöhnliche Arithmetisch-Logische-Einheit nach dem Stand der Technik (ALU), die durch spezielle Funktionen, wie Zahler erweitert ist. Diese EALU ist in der Lage eine Vielzahl von arithmetischen und logischen Operationen durchzuführen, ohne hier genau spezifiziert werden zu müssen, da auf ALUs die dem Stand der Technik entsprechen zurückgegriffen werden kann. Die EALU hat direkten Zugriff auf ihre eigenen Ergebnisse, diese werden wie nachfolgend beschrieben als Operand zurückgeführt. Dadurch sind Zähler oder serielle Operationen, wie die serielle Multiplikation, Division oder Reihenentwicklungen, möglich. Die EALU liefert neben ihrem Ergebnis die Signale CarryOut-AlessB und AequalB-Odetect. CarryOut-AlessB gibt entweder bei arithmetischen Operationen das Carry an, oder bei Vergleichen mittels einer Subtraktion zweier Werte gibt der Übertrag, also CarryOut-AlessB, daß A<B, bzw. B<A, abhängig vom negierten Operanden an. Das Signal ist das übliche Carry generiert durch einen Volladdierer. AequalB-0detect gibt an, daß das Ergebnis im Ergebnisregister R-REGsft gleich 0 ist. Das Signal wird über ein NOR aus dem Ergebnis generiert. Die Signale werden zur einfachen Auswertung von Zuständen verwendet und können an die PLU zurückgeliefert werden. Weitere Statussignale sind je nach Anwendung implementierbar.
Die Funktion der EALU wird in einem Funktionsregister(F-PLUREG) konfiguriert.

### 2.3.1 O-REG

Die Eingangsoperanden der EALU werden in zwei unabhängige Operandenregister (O-REG) gespeichert. Dadurch stehen sie
unabhängig des Zustandes der Einheit, die die Daten liefert (Datensender) zur Verfügung. Dies ist notwendig um eine Entkopplung vom Bus und eine freie Umkonfigurierbarkeit des PAs zu ermöglichen. Eines oder beide O-REG besitzen eine Schiebefunktion, die von der EALU für ggf. jedes O-REG einzeln angesteuert wird. Die Schiebefunktion ermöglicht das Durchführen von seriellen Operationen wie serielles Multiplizieren oder Dividieren im EALU. O-REG mit Scheibefunktion werden als O-REGsft bezeichnet.

### 2.3.2 R-REGsft

Das Ergebnis der EALU wird in einem Ergebnisregister gespeichert (R-REGsft). Dadurch wird die zeitliche Unabhängigkeit von der oder den das Ergebnis empfangenden Einheiten (Datenempfänger) erreicht. Das R-REGsft besitzt eine Schiebefunktion, die von der EALU angesteuert wird, wodurch serielle Operationen ermöglicht werden.

### 2.3.3 R2O-MUX

Die Ergebnisdaten, die in R-REGsft stehen, werden über einen Multiplexer (R2o-MUX) zwischen einem der O-REG und der EALU als Operand eingeschleift, um eine Rückkopplung des Ergebnisses für serielle Operationen, Zähler und ähnliche Funktionen zu gewährleisten. Der Multiplexer wird durch das F-PLUREG eingestellt.

### 2.2.4 Taktzyklen

Es ist sinnvoll, jedoch nicht zwingend erforderlich, die O-REG(sft) bei einer Taktflanke anzusteuern und die R-REGsft bei der darauffolgend negierten Taktflanke. Dadurch hat die EALU einen Halbtakt zur Ausführung ihrer Funktion zur Verfügung, der zweite Halbtakt steht für Signallaufzeiten und Multiplexer zur Verfügung. Dadurch wird es möglich in jedem Takt eine komplette Operation auszuführen.

### 2.2.5 StateMachine, SM-Unit

Zur Ablaufsteuerung in der EALU existiert eine SM-UNIT. Diese steuert die O-REG und R-REGsft und deren Schiebefunktion, sowie R2O-MUX. Dadurch wird erreicht, daß serielle Operationen, Schiebe- und Zählfunktionen einfach von der EALU durchgeführt werden können. Die StateMachine ist dabei nach dem Stand der Technik einfach zu implementieren.

### 2.2.6 Sync-UNIT

Zur Synchronisation einer PAE innerhalb eines Arrays (PA) aus PAEs ist eine Synchronisationseinheit (Sync-UNIT) vorhanden. Diese wertet eine Reihe von Eingangssignalen, die ein Handshake-Protokoll ausführen, aus.
- rACK(h/1):: Der Datenempfänger quittiert die empfangenen Daten. Dabei ist rACKh die Quittierung des hohen Ergebnisbytes (Bit 8 bis 15) und rACKl die des niederen Ergebnisbytes (Bit 0 bis 7). Beide werden verUNDet (rACKh UND rACKl) und ergeben das Signal rACK. rACK ist nicht wahr, während einer oder beide Datenempfänger mit der Verarbeitung ihrer Daten beschäftigt sind und wird wahr, wenn die Verarbeitung der Daten beider Datenempfänger abgeschlossen ist und das Ergebnis im R-REGsft des jeweiligen Datenempfängers gespeichert ist. Die Signale rACK(h/l) werden im weiteren oftmals in ihrer verUNDeten Form als rACK (=rACKh & rACKl) betrachtet.
- oRDY(1/2):: Der Datensender signalisiert seine Bereitschaft neue Daten zu senden. oRDY ist nicht wahr, während der Datensender mit der Verarbeitung seiner Daten beschäftigt ist und wird wahr, wenn das Ergebnis des Datensenders, das der Operand der PAE ist, zur Verfügung steht. Dabei ist oRDY1 das Freigabesignal des Datensenders des ersten Operanden und oRDY2 das des Zweiten. Beide werden verUNDet (oRDY1 UND oRDY2) und ergeben das Signal oRDY. oRDY ist nur wahr, wenn beide Datensender bereit sind Daten zu versenden. Die Signale oRDY(1/2) werden im weiteren oftmals in ihrer verUNDeten Form als oRDY (=oRDY1 & oRDY2) betrachtet.

Aus den Eingangssignalen und dem Zustand der Sync-UNIT, der zusammen mit der Ablaufsteuerung der EALU den Gesamtzustand der PAE darstellt, werden Ausgangssignale generiert, die von den Sync-UNITs der Datensender und -empfänger ihrerseits als Eingangssignale betrachtet werden. Zur Ablaufsteuerung der EALU werden deren Statusinformationen und das Register F-PLUREG verwendet.
- rRDY:: Zeigt an, daß die PAE ihre Datenverarbeitung beendet hat und ein Ergebnis im R-REGsft zur Verfugung steht. rRDY wird als rRDYh und rRDYl an beide Datenempfänger übertragen. Dabei handelt es sich jedoch um dasselbe Signal!
- oACK:: Zeigt an, daß die PAE ihre Operanden verarbeitet hat und neue Daten in den O-REG(sft) aufnehmen kann. oACK wird als oACK1 und oACK2 an beide Datensender übertragen. Dabei handelt es sich jedoch um dasselbe Signal!

Die RDY-Signale behalten ihren Pegel bis zum Eingang der Quittierung durch ACK bei. Dies ist erforderlich wenn der Datenempfänger während der Bereitstellung der Daten umkonfiguriert wird. Steht RDY bis zur Quittierung durch ACK an, so erkennt der Datenempfänger nach der Umkonfigurierung, daß Daten bereitstehen und nimmt sie an.

Die Verknüpfung der Signale über mehrere PAEs stellt sich wie folgt dar:

| Datensender | | PAE | | Datenempfänger |
|---|---|---|---|---|
| rRDY | → | ORDY rRDY | → | oRDY |
| rACK | ← | oACK rACK | ← | oACK |

Das bedeutet z.B. das Ausgangssignal rRDY des Datensenders stellt das Eingangssignal oRDY1 oder oRDY2 der PAE dar. Das Ausgangssignal rRDY der PAE stellt das Eingangssignal oRDY des Datenempfängers dar.

Die Sync-UNIT besitzt folgende Ablaufarten:

| Modus | Beschreibung | Bemerkung |
|---|---|---|
| Warten OP | Die PAE wartet auf Operanden | Nur wenn keine mehrzyklische Operation abläuft |
| Zyklus 1 | Eine einzyklische Operation wird durchgeführt | Operanden werden quittiert |
| Zyklus n | Ein Zyklus einer mehrzyklischen Operation wird durchgeführt | |
| Zyklus Z | Der letzte Zyklus einer mehrzyklischen Operation wird durchgeführt | Operanden werden quittiert |
| Warten ERG | Die PAE wartet auf die Quittierung des Ergebnisses | Nur wenn vorhergehendes Ergebnis exisistiert |
| Stop | Ausführung nach Beendigung des laufenden Zyklusses anhalten, dann ReConfig quittieren, wenn auch Ergebnis quittert wurde | |

Die Sync-UNIT stellt einen besonderen Modus zur Verfügung, der das Taktsignal nur freigibt, wenn Operanden zur Verfügung stehen. Dieser Modus ist vor allem dann sinnvoll, wenn die Datensender die Daten nicht in jedem Prozessortakt liefern, sondern nur jeden n. Takt. Dabei entspricht der Takt einer Periode des Normaltaktes und wird über rACK oder oRDY(1/2) freigegeben. Die Freigabe wird als OneShot bezeichnet. Der Modus wird als OneShot-MODE bezeichnet. Dabei wird der Takt über ein UND-Gatter mit einem der Freigabesignale verUNDet. Der Modus und die Signalauswahl findet über das F-PLUREG statt. Das Freigabesignal, generiert über rACK oder ORDY(1/2), kann von der SM-UNIT verlängert werden. Dies ist erforderlich, damit Operationen, die mehr als einen Takt benötigen im OneShot-MODE durchgeführt werden können. Um dies zu ermöglichen, wird eine entsprechende Signalleitung der SM-UNIT mit dem Freigabesignal verODERt.

Wird der Registereintrag STOP im F-PLUREG gesetzt, so führt die Sync-UNIT die laufende Funktion zu Ende. Danach werden keine weiteren Operanden mehr angenommen und quittiert. Sobald rACK anzeigt, daß das Ergebnis vom Datenempfänger angenommen wurde, wird die Umkonfigurierungsbereitschaft der PLU durch das Signal ReConfig angezeigt. Das Signal wird generiert, indem rACK das Stop des F-PLUREG in ein D-FlipFlop speichert. ReConfig kann durch einen lesenden Zugriff der PLU auf F-PLUREG an der Bitposition von Stop abgefragt werden.

Ebenfalls kann die Sync-UNIT dazu verwendet werden Fehlerzustände oder weitere Statussignale zu generieren und auszuwerten.

### 2.2.7 BM-UNIT

Zum Aufschalten der Operanden und des Ergebnisses auf die externen Bussysteme existiert eine Busmultiplexeinheit (BM-UNIT). Diese besteht aus 2 Multiplexern und 2 Tore, wobei die 2 Multiplexer für die Operanden (O-MUX) und 2 Tore für das Ergebnis (R-GATE) existieren, dabei wird jeweils ein Schalter für das höherwertige und niederwertige Ergebnis verwendet. Die Multiplexer und Schalter werden über das Multiplexerregister ({M-PLUREG}) gesteuert. Die Sync-UNIT-Signale werden über die Schalter auf den Bus gesteuert. Dabei ist die Zusammengehörigkeit der Multiplexer/Schalter und Signale wie folgt:
O-MUX1: oRDY1, oACK
O-MUX2: ORDY2, oACK
RH-GATE: rRDY, rACKh
RL-GATE: rRDY, rACK1

Das R-GATE kann über das M-PLUREG in einen Zustand gebracht werden, in dem es kein Bussystem treibt.

Die Tabelle gibt eine Beschreibung der Signale, sowie deren jeweiliger Interface-Struktur:

| Signal | oRDY | OACK | rRDY | rACK | D7..0 |
|---|---|---|---|---|---|
| zeigt an | Operanden bereit | Operanden Quittiert | Ergebnis bereit | Ergebnis quittiert | Daten |
| Typ | Eingang | Open-Kollektor | Treiber | Eingang | Bi-direktional |

Es ist möglich mehrere Datenempfänger von einem Datensender aus anzusprechen (Broadcasting). Hierzu schalten sich mehrere Datenempfänger auf denselben Bus. Um eine Quittierung der Daten zu gewährleisten ist die Treiberstufe der Quittierungsleitung oACK als Offener-Kollektor-Treiber gestaltet. Dabei arbeitet der Bus als wired-AND, d.h. erst wenn alle Datenempfänger quitteren entsteht der für die Quittierung erforderliche H-Pegel. Dies wird dadurch erreicht, daß jeder Datenempfänger, der NICHT quittiert den Bus über einen Open-Kollektor-Transistor auf einen L-Pegel zieht. Datenempfänger die quittierern, steuern den Open-Kollektor-Transistor nicht an und belasten somit den Bus nicht. Wenn alle Datenempfänger quittieren wird der Bus nicht mehr belastet und nimmt über einer. Pull-Up-Widerstand H-Pegel an.

### 2.2.8 StateBack-UNIT

Die PAE ist in der Lage Rückmeldungen über ihren Betriebszustand an ihre Ladelogik, im folgenden PLU genannt, zu liefern (vgl. DE 44 16 881 A1). Die Ladelogik konfiguriert das PA und benotigt, um sinnvolle Umkonfigurationen vornehmen zu können, Informationen über den Status der einzelnen PAEs. Dies geschieht über die StateBack-UNIT. Diese überträgt je nach Eintrag im F-PLUREG entweder die unteren 3-Bit des Ergebnisses aus dem R-REGsft --- um berechnete Werte an die PLU zu liefern --- oder die Signale CarryOut-AlessB und AequalB-Odetect auf einen 3-Bit Statusbus. Um das Aufschalten der Signale von mehreren PAEs aus zu ermöglichen wird ein einfaches wired-OR Verfahren über Open-Kollektor-Treibern verwendet. Damit die Umkonfigurierung der PAE erst beginnt, wenn der Empfänger die Daten quittiert hat, kann zwischen den Signalen und den Open-Kollektor-Treibern eine Latch-Stufe eingeschleift werden, die die Signale erst nach Eingang des rACK freigibt. Der Statusbus wird von der PLU überwacht. Diese reagiert in ihrem Programmfluß und ihrer Umkonfiouration auf den vom Bus gelieferten Status.

### 2.2.9 Power-UNIT

Die PAE besitzt einen Stromsparmodus ({Sleep-MODE}), der ebenso wie die Funktion der EALU im F-PLUREG eingestellt wird. Hierfür existiert ein Bit, das, wenn es gesetzt ist, den Sleep-MODE einschaltet. Hierzu kann entweder die Taktleitung der PAE auf konstant logisch 0 oder 1 gesetzt werden, oder über einen Transistor die Spannung der PAE abgeschaltet werden. Das F-PLUREG steht innerhalb der PAE immer unter Spannung und ist nicht abschaltbar. Für die jeweils ausgeführte Funktion unbenutzte Bereiche (Gatter) der PAE werden durch Auswertung des F-PLUREG abgeschaltet. Dies geschieht über einen Transistor, der die Bereiche von der Spannungsversorgung trennt. Um unerwünschte Störeinflüsse zu verhindern sind die Ausgänge der Bereiche über Pull-Up/Pull-Down-Widerstände definiert.
Zusätzlich kann innerhalb des OneShot-MODE, der von der Sync-UNIT gesteuert wird, der PowerSave-MODE verwendet werden. Dabei werden sämtliche Teile der PAE, mit Ausnahme von F-, M-PLUREG und Sync-UNIT von der Versprgungsspannung getrennt. Erst wenn die Sync-UNIT einen OneShot feststellt, werden alle benötigten PAE-Teile über die Power-UNIT zugeschaltet. Die Sync-UNIT verzögert das Taktsignal so lange, bis alle neu zugeschalteten Teile arbeitsfähig sind.

### 2.2.10 Register

Die Register F-PLUREG und M-PLUREG sind mit dem PLU-Bus verbunden. Die Adresse der von der PLU gesendeten Datenpakete werden in einem Vergleicher dekodiert. Ist die Adresse der PAE erkannt, so werden die Daten in die Register gespeichert. Der PLU-Bus ist wie folgt gestaltet:
- AX7..0:: X-Adresse der X/Y-Matrix
- AY7..0:: Y-Adresse der X/Y-Matrix
- RS:: Register Select, logisch 0 wählt F-PLUREG, logisch 1 wählt M-PLUREG aus.
- AEN:: Adress Enable, der Bus enthält eine gültige Adresse. Die Adressen müssen dekodiert werden, solange AEN logisch 0 ist. AEN ist während des gesamten Buszugriffes, also auch während der Datenübertragung logisch 0.}
- D23..00:: Daten
- DEN:: Data Enable, der Bus enthält gültigè Daten. Die Daten müssen bei steigender Flanke des Signals DEN in das Register übertragen werden)
- OEN:: Output Enable, die PLU liest gültige Daten aus den PLUREGs.}

### 2.2.11 Der Aufbau des F-PLUREG:

### 1. Der Registeraufbau beim Schreibzugriff

| F11 | F10..9 | F8 | F8 | F5 | F4..0 |
|---|---|---|---|---|---|
| Stop | StateBack | Sleep | OneShot | PowerSave | EALU function |

Die Funktionen der einzelnen Bits:

| Funktion | Zustand | Wirkung |
|---|---|---|
| Stop | 0 | Normale Funktion |
| | 1 | Funktionen nach laufendem Zyklus anhalten, keine Quittierung der Operanden |
| StateBack | 00 | keine Rückmeldung, Bus offen |
| | 01 | D2..0 auf Bus |
| | 10 | CarryOut-AlessB, AequalB-0detect auf Bus |
| | 11 | Illegal |
| Sleep | 0 | keine Funktion, spannungslos |
| | 1 | normale Funktion, Spannung |
| OneShot | 00 | normale Funktion |
| | 01 | OneShot auf oRDY1 |
| | 10 | OneShot auf oRDY2 |
| | 11 | OneShot auf (rACKh & rACK1) |
| PowerSave | 0 | kein PowerSave |
| | 1 | Stromsparmodus in Verbindung mit OneShot |
| EALU function | 00000 | keine Operation (NOP) |
| | 00001 | |
| | ... | Funktion gemäß Ausführung der EALU |
| | 11111 | |

Der Reset-Zustand ist 0 in allen Bits.

### 2. Der Registeraufbau beim Lesezugriff

| |
|---|
| F11 |
| ReConfig |

Die Funktionen der einzelnen Bits:

| Funktion | Zustand | Wirkung |
|---|---|---|
| ReConfig | 0 | Keine Umkonfigurierung möglich |
| | 1 | Umkonfigurierung möglich |

Der Reset-Zustand ist 0 in allen Bits.

Der Aufbau des M-PLUREG:

| M23..18 | M17..12 | M11..06 | M05..00 |
|---|---|---|---|
| Ergebnis höherwertig | Ergebnis niederwertig | Operand 1 | Operand 0 |

Die Werte M(n+5)..n = 000000, n∈{0,6,12,18} bedeuten, daß die Multiplexer/Schalter offen sind und keinen Buskontakt besitzen. Es kann sinnvoll sein, das M-PLUREG über das Signal ReConfig zu sperren, d.h. sobald ReConfig aktiviert wird, schaltet sich die PAE von allen Bussystemen ab.
Der Reset-Zustand ist 0 in allen Bits.

### 3. Zusammenfassung

Durch die Reduzierung der Konfigurationsdaten auf das Register F-PLUREG kann die Funktion des PAE einfacher und schneller konfiguriert und umkonfiguriert werden als in bekannten Technologien, insbesondere der FPGA-Technologie. Die Vernetzung des Rechenwerkes wird im M-PLUREG angegeben, während in den herkömmlichen Technologien eine Vielzahl einzelner, nicht zusammenhängender Konfigurationsbits besetzt werden müssen. Durch die klare Struktur der Register wird eine (Um)Konfiguration vereinfacht.
Der Platzbedarf des PAE ist durch die direkte Ausgestaltung als Rechenwerk kleiner als in herkömmlichen Technologien, in denen Rechenwerke durch eine Vielzahl von Logikzelien implementiert wurden. Gleichzeitig sind die Durchlaufverzögerungen geringen und die erzielbaren Taktfrequenzen entsprechend höher.
Eine Broadcasting-Funktion ist durch die Ausgestaltung der BM-UNIT gewährleistet, die Quittierung erfolgt automatisch. Durch die einund ausgangsseitigen Register (O-REG, R-REG) ist ein zeitlich weitgehend unabhängiger Datentransfer gewährleistet.
Die Konfiguration und Umkonfiguration wird durch die Entkopplung jeder PAE vom Gesamtsystem über die Register O-REG und R-REGerheblich vereinfacht, da die einzelnen PAEs weitgehend voneinander unabhängig sind. Die Rückmeldungen an die PLU, sowie das Zusammenspiel von STOP und ReConfig ermöglichen die effiziente Steuerung der (Um) Konfigurationen.

Es sind Stromsparfunktionen implementiert, die --- teilweise automatisch (OneShot-MODE) --- zu einer Reduzierung des Leistungsverbrauches führen.

Die PAE-Struktur kann zur Erhöhung der Effizienz von FPGAs in deren Architektur implementiert werden. Dadurch sind arithmetische Operationen erheblich leistungfähiger realisierbar.

### 4. Kurzbeschreibung der Diagramme

- Figur 1: Anordnung mehrerer PAEs zu einem PA mit PLU. Ohne Verbindung zu Ein-/Ausgabesystemen oder Speicher.
- Figur 2: Aufbau einer PAE.
- Figur 3: Aufbau von F-PLUREG und M-PLUREG.
- Figur 4: Aufbau eines O-REG.
- Figur 5: Aufbau eines O-REGsft mit rechtsschiebe-Funktion.
- Figur 6: Aufbau eines R-REGsft mit rechts/links 1-2bit Barrel-Shifter.
- Figur 7: Aufbau des R2O-MUX, sowie Implementierung eines MUX in Transfer-Gate-Technik.
- Figur 8: Taktsynchronisation, Verzögerungen und synchron Signale
- Figur 9: Funktionsweise der Sync-UNIT. Beschreibung.
- Figur 10: Aufbau der Power-UNIT
- Figur 11: Aufbau der Sync-UNIT
- Figur 12: Aufbau der BM-UNIT
- Figur 13: Aufbau eines O-MUX, begrenzt auf 4 Bussysteme
- Figur 14: Aufbau eines R-GATE, begrenzt auf 4 Bussysteme
- Figur 15: Aufbau der StateBack-UNIT
- Figur 16: Funktionsprinzip des OneShot- und OneShot/PowerSave-MODE
- Figur 17: Implementierungsbeispiel einer PAE
- Figur 18: Aufbau einer PAE, wobei die Verbindung der einzelnen Funktionen über ein Bussystem erfolgt
- Figur 19: Funktionsweise der Config-State-Machine
- Figur 20: Funktionsweise der Loop-State-Machine
- Figur 21: Zyklische Verarbeitung der Konfigurationsregister Daten

### 4.1 Detailbeschreibung der Diagramme

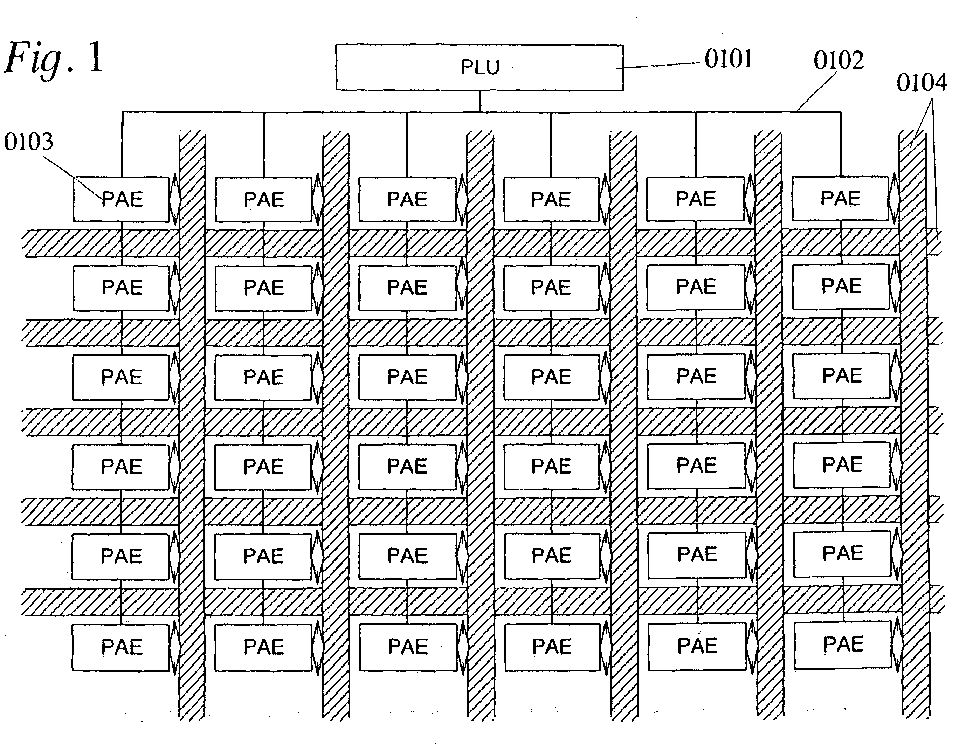

Figur 1 stellt einen vereinfachten Prozessor gemäß DE 44 16 881 A1 dar. Zudem ist die PLU (0101) und deren Bussystem (0102) angezeigt. Die PAEs (0103) sind als Array eingetragen, das chipinterne Bussystem (0104) ist schematisch dargestellt.

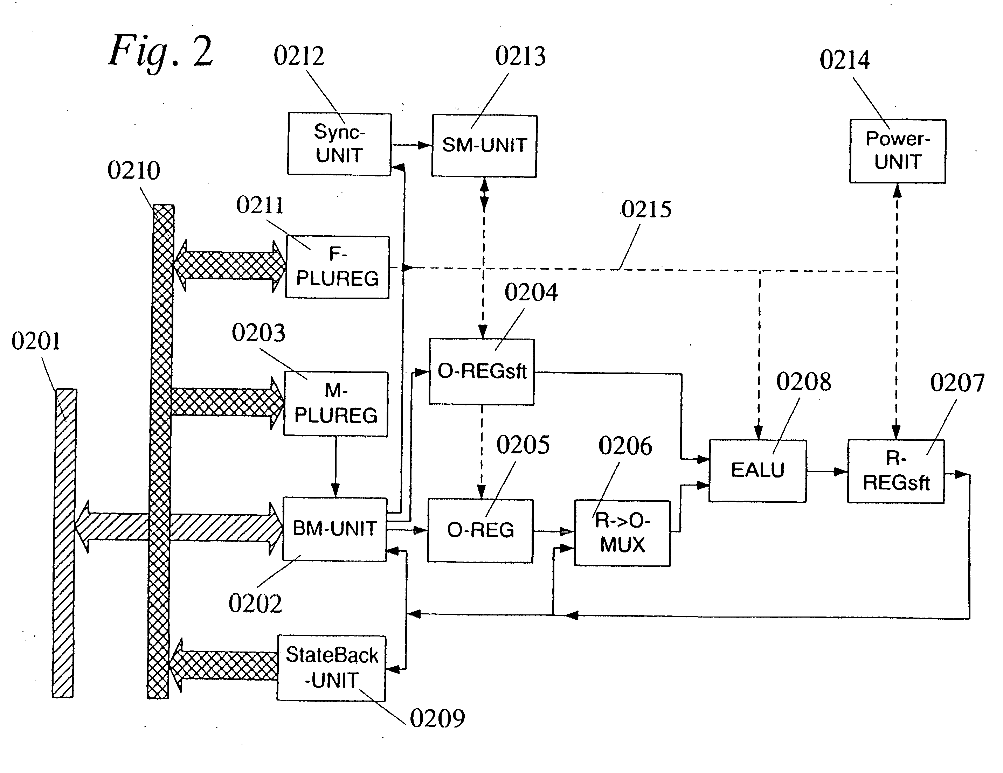

Figur 2 zeigt den schematisierten Aufbau einer PAE. Das chipinterne Bussystem (0201) wird an die BM-UNIT (0202) geführt, welche die durch M-REG (0203) ausgewählten Busse an das O-REGlsft (0204) als Operand 1 und das O-REG (0205) als Operand 2 weiterschaltet. In den Datenpfad von Operand 2 wird über den R2C-MUX (0206) das im Ergebnisregister R-REGsft (0207) stehende Ergebnis wahlweise eingeschleift. Die Daten aus O-REGsft (0204) und R2O-MUX (0206) werden im ELAU (0208) verarbeitet. Über die StateBack-UNIT (0209) finden Rückmeldungen an die PLU statt. Der PLU-Bus (0210) hat Verbindung zu den Registern F-PLUREG (0211) und M-PLUREG (0212), sowie der StateBack-UNIT (0209). Über ihn wird die PAE konfiguriert und überwacht. Das F-PLUREG enthält alle funktionellen Konfigurationsdaten, das M-PLUREG enthält die Vernetzungsinformation der PAE. Die Sync-UNIT (0212) steuert das Zusammenspiel des Datenaustausches zwischen den Datensendern, den Datenempfängern und der Verarbeitungs-PAE. Die SM-UNIT (0213) steuert den gesamten internen Ablauf der PAE. Die Power-UNIT (0214) regelt die Stromversorgung und dient der Reduzierung des Stromverbrauches.

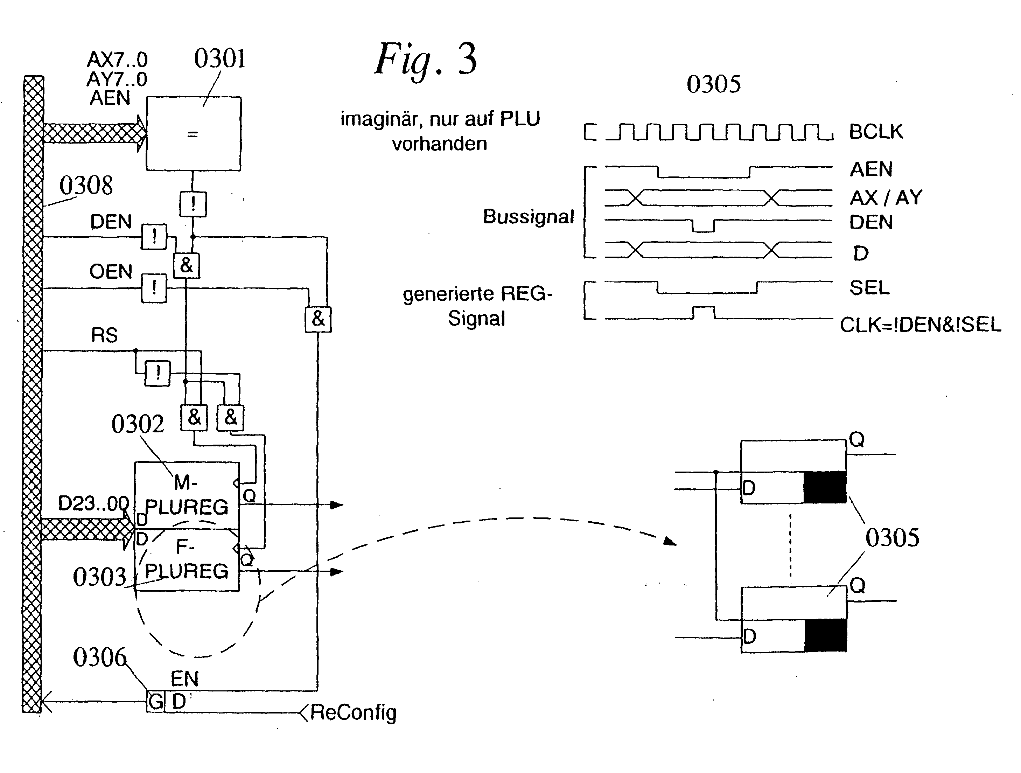

In Figur 3 wird die Funktionsweise der Register M-PLUREG und F-PLUREG verdeutlicht. Die Adressen AX und AY des PLU-Bus (0308) werden in einem Vergleicher (0301) mit der Adresse der PAE verglichen, sofern AEN (Adress Erable) einen gültigen Bustransfer anzeigt. Dabei besitzt jede PAE eine eindeutige Adresse, die sich aus ihrer Spalte und Zeile innerhalb einer PA zusammensetzt. Zeigt DEN (CataEnable) die Datenübertragung an, so wird über RS (RegisterSelect) entweder M-PLUREG(0302) oder F-PLUREG (0303) ausgewählt. Bei der steigenden Flanke von DEN werden die Daten im betreffenden Register gespeichert. Die Register sind als D-FlipFlop (0304) implementiert. Zur Verdeutlichung des Ablaufes dient das Timingdiagramm 0305. Zum lesenden Zugriff auf das F-PLUREG wird lediglich über das Tor (0306) das Signal ReConfig von der Sync-UNIT an den PLU-Bus gegeben. Die Freigabe geschieht über das Ergebnis des Vergleichers (0301) UND dem Signal OEN.

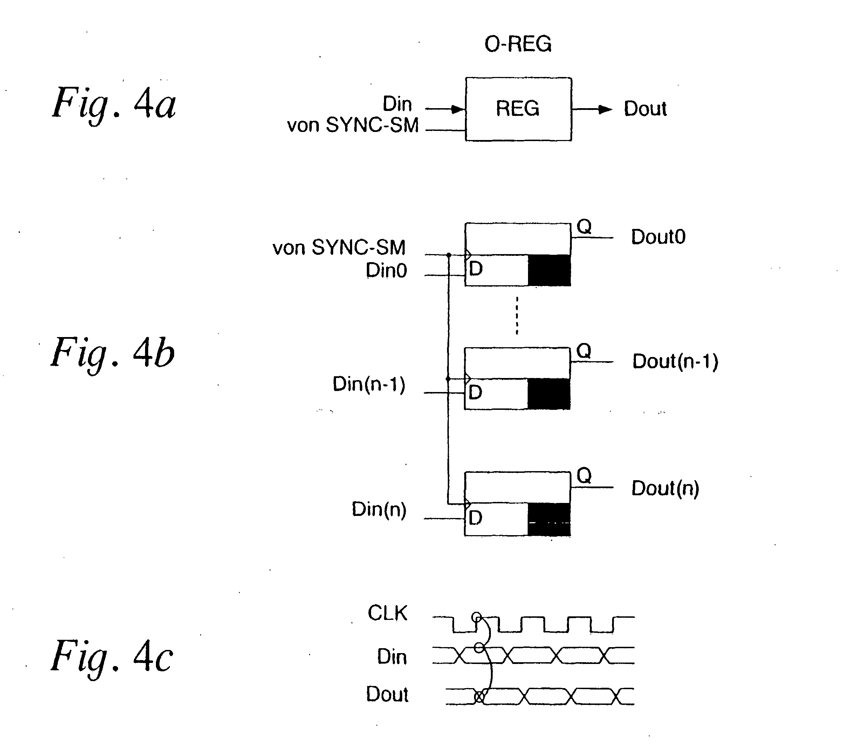

Figur 4a zeigt das Blockdiagramm des O-REG. In Figur 4b ist der Aufbau des O-REG aus D-FlipFlops ersichtlich. Das Timingdiagramm ist in Figur 4c dargestellt. Der Takt wird von der SYNC-SM generiert.

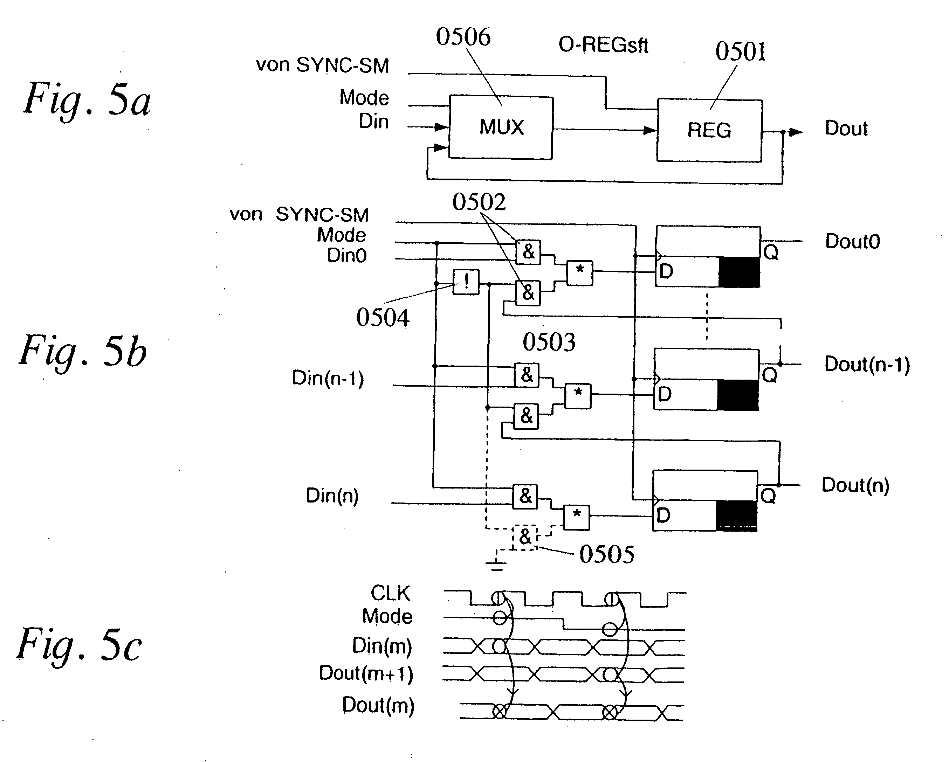

Figur 5a zeigt das Blockdiagramm des O-REGsft. In Figur 5b ist der Aufbau des C-REGsft aus D-FlipFlops (0501) ersichtlich. Die UND-Gatter (0502) und das OR-Gatter (0503) bilden über den Inverter (0504) einen durch Mode gesteuerten Multiplexer (0506), der entweder die Eingangsdaten auf die D-FlipFlop (0501) schaltet, oder die Ausgangsdaten der D-FlipFlop um ein Bit verschoben an deren Eingang leitet. Das UND-Gatter (0505) ist nicht notwendig, da ein Eingang permanent auf logisch 0 liegt. Es dient nur der Anschaulichkeit. In Figur 5c ist das Timingdiagramm in Abhängigkeit von dem Signal Mode angegeben. Der Takt wird von der SYNC-SM generiert.

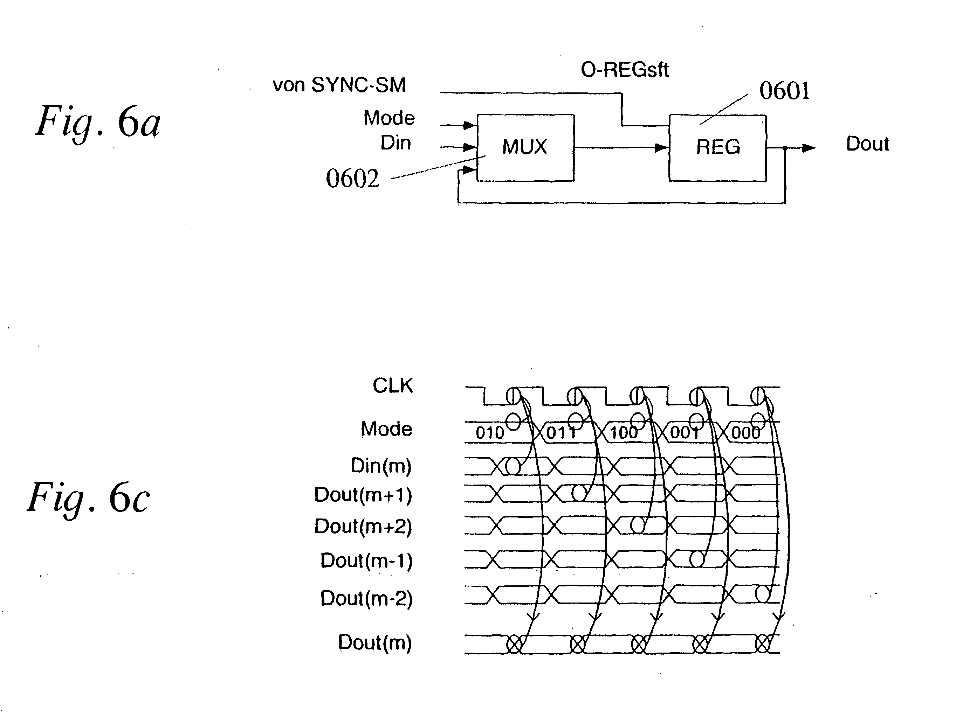

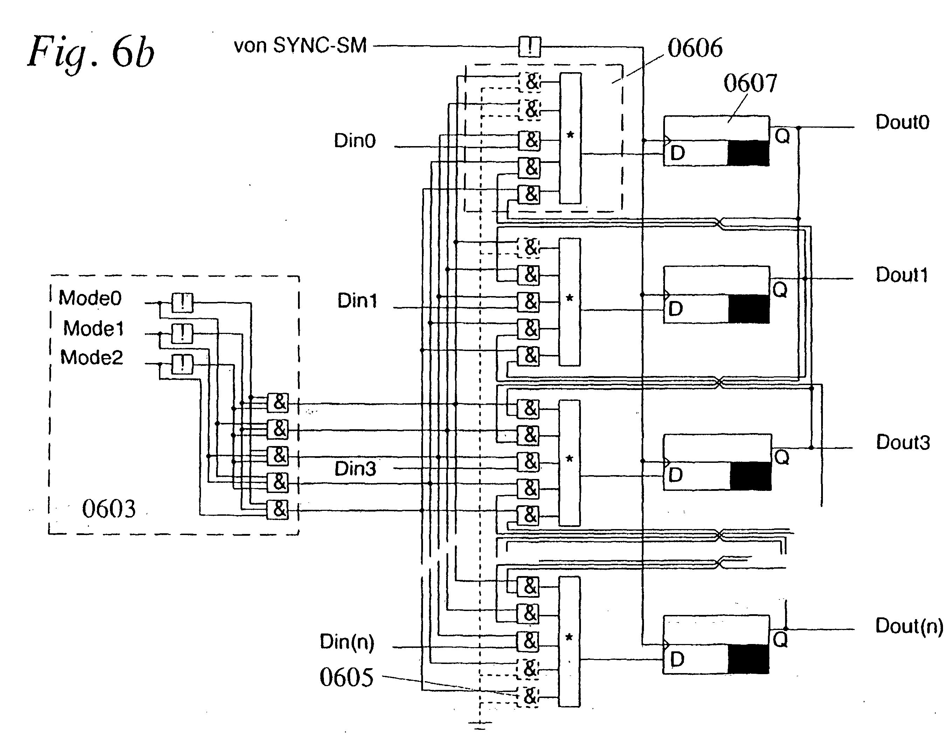

Figur 6a zeigt den Blockaufbau des R-REGsft vor dem Register (0601) liegt ein Multiplexer (0602), der entweder die Eingangsdaten auf das Register (0601) schaltet, oder die Ausgangsdaten des Registers (0601) verschoben an dessen Eingang leitet. Der von der SYNC-SM generierte Takt wird um einen Halbtakt verschoben an das Register geführt. In Figur 6b ist das Blockdiagramm auf Gatterebene dargestellt. Über einen Dekoder (0603) schalten Mode0-2 einen aus UND-Gattern mit nachgeschaltetem ODER-Gatter bestehenden Multiplexer (0606). Dabei sind die gestrichelt eingezeichneten Gatter (0605 und weitere) nur der Verdeutlichung wegen eingezeichnet. Sie sind funktionslos, da ein Eingang ständig auf L liegt. Der Multiplexer schaltet im Zustand Mode0-2 = 010 das Eingangssignal auf die Register (0607). In den Zuständen Mode0-2 = 000 bis Mode0-2 = 001 werden die Ausgangswerte der Register (0607) nach links, in den Zuständen Mode0-2 = 011 bis Mode0-2 = 100 rechts, um ein bzw. zwei Bit verschoben, an die Eingänge der Register geführt. Die Schiebefunktion wird in Abhängigkeit vom Zustand Mode0-2 im Timingdiagramm Figur 6c verdeutlicht.

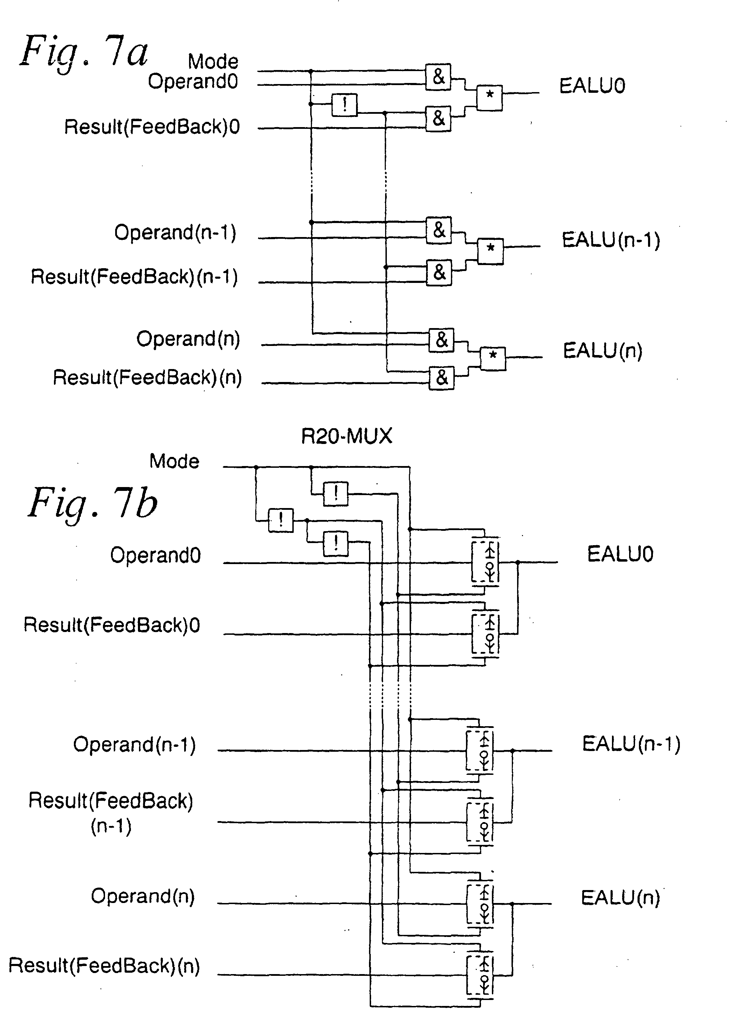

Figur 7a zeigt den Aufbau des Multiplexers R2O-MUX, der in Abhängigkeit von Mode die Operanden oder das Ergebnis an die EALU weiterleitet. Dabei ist Figur 7a als herkömmlicher Multiplexer aufgebaut, während in Figur 7b die platz- und leistungssparende Variante durch die Verwendung von CMOS Transfer-Gates (0701) aufgezeigt wird. Alle in dieser Schrift beschriebenen Multiplexer können mittels Transfer-Gates aufgebaut werden.

Ein Tor kann äquivalent zum Multiplexer aus Transfer-Gates aufgebaut werden. Dabei ist jedoch die Richtung des Datenaustausches genau umgekehrt!

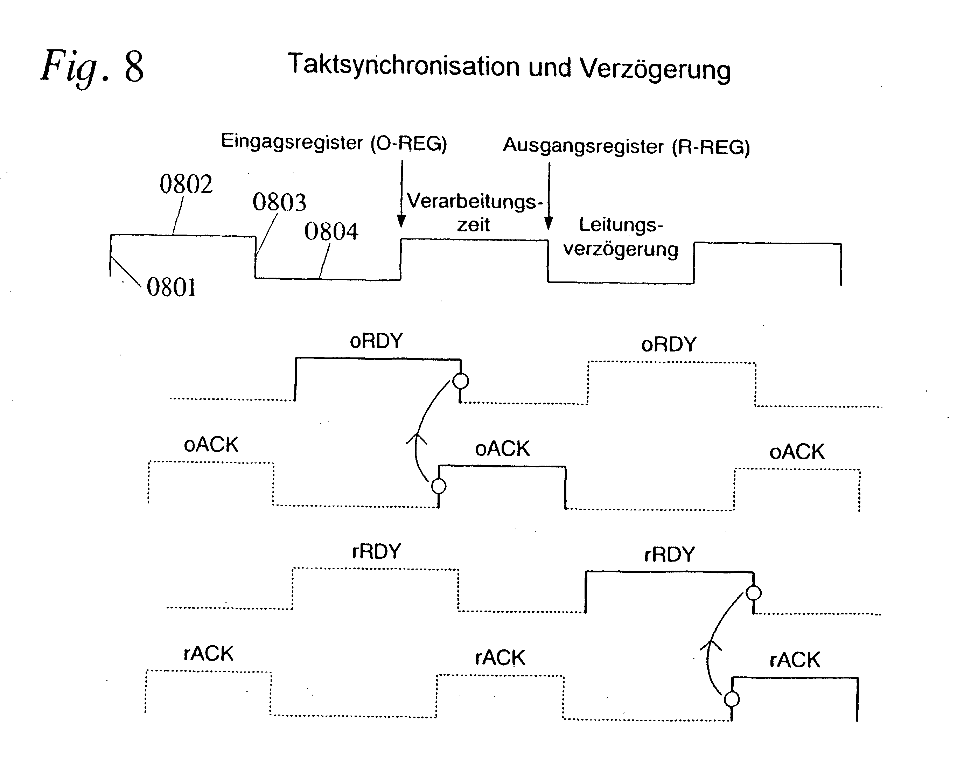

Figur 8 zeigt das Verhältnis des PAE-internen Taktes CLK zu den stattfindenden Aktivitäten. Bei der steigenden Flanke (0801) werden die Operanden in die O-REG gespeichert. Während des H-Pegels (0802) verarbeitet die PAE die Daten (ΔPAE = Verarbeitungsphase). Das umfaßt den Datenverkehr zwischen den O-REG und dem R-REG. Bei der fallenden Flanke (0803) wird das Ergebnis im R-REG gespeichert. Der L-Pegel (0804) wird für die Verteilung der Ergebnisse im Bussystem, eingeschlossen der BM-UNIT genutzt ΔNetwork = Busphase). Der zeitliche Ablauf der von der SYNC-SM generierten Signale (oRDY und oACK, rRDY und rACK) ist in das Zeitdiagramm eingetragen.

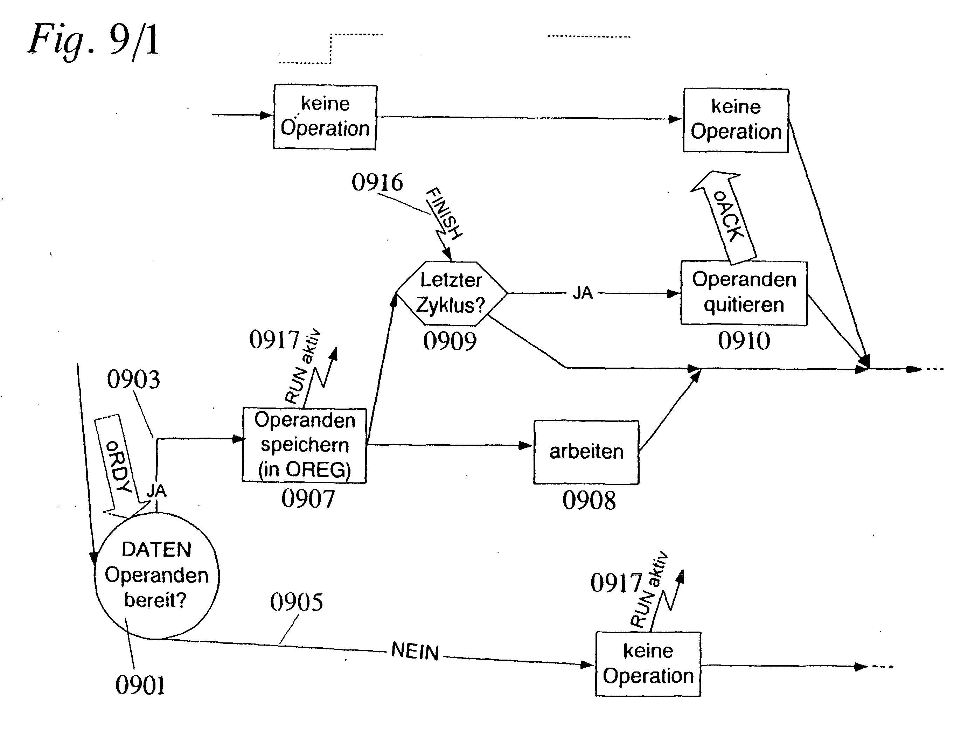

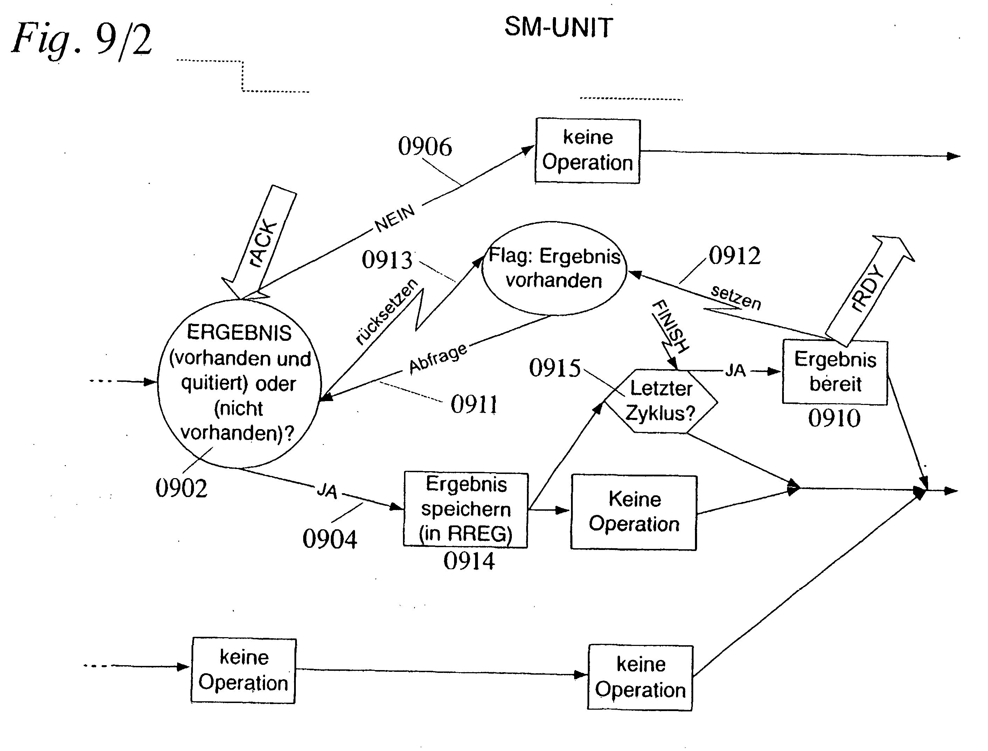

Das Ablaufdiagramm der Sync-UNIT ist in Figur 9 dargestellt. Die Zustandsmaschine kennt zwei feste Zustände DATEN (0901) und ERGEBNIS (0902). DATEN wird auf die steigende Flanke synchronisiert, ERGEBNIS auf die Fallende. Dabei wird jeweils der Zustand der Eingangsparameter ausgewertet und je nach Ergebnis in den Zweig ja (0903/0904) oder nein (0905/0906) gesprungen. Sind in DATEN die Operanden nicht bereit, wird nein angesprungen. In den nächsten Schritten wird keine Operation ausgeführt, bis die Maschine nach DATEN zuruckspringt und erneut auswertet. Stehen nun Operanden, angezeigt durch oRDY, bereit, werden die Operanden im O-REG (0907) gespeichert. Die Operanden werden verarbeitet (0908) und gleichzeitig wird ausgewertet (0909), ob es sich bei mehrzyklischen Operationen (serielle Operationen, die mehr als einen Taktzyklus benötigen), um den letzte Zyklus handelt, oder ob eine einzyklische Operation abläuft. In diesen Fällen werden die Operanden durch oACK quittiert (0910). Mit der fallenden Flanke wird ERGEBNIS synchronisiert. Dabei wird überprüft ob das Flag "Ergebnis vorhanden" gesetzt ist (0911). Dieses Flag wird immer gesetzt, wenn ein fertiges Ergebnis durch rRDY signalisiert wird (0912). In zwei Fällen wird in den JA-Zweig (0904) gesprungen:
1. Es ist kein vorhergehendes Ergebnis vorhanden (Flag "Ergebnis vorhanden" unwahr).
2. Es ist ein vorhergehendes Ergebnis vorhanden (Flag "Ergebnis vorhanden" wahr) und dieses ist mit rACK quittiert. In diesem Fall (und nur in diesem Fall(!)) setzt 0902 das Ergebnis zurück (0913).

Ansonsten wird in den NEIN-Zweig (0906) gesprungen und keine Operation ausgeführt, bis die Zustandsmaschine nach ERGEBNIS (0902) zurückkehrt. Im JA-Zweig (0904) wird das Ergebnis in das Ausgangsregister R-REGsft gespeichert (0914). Danach wird ausgewertet ob es sich um den letzten Zyklus einer mehrzyklischen Operation handelt (0915) (vgl. 0909) oder ob eine einzyklische Operation abläuft , wenn ja, wird das Vorhandensein des Ergebnisses durch rRDY signalisiert (0916). Die Zustandsmaschine springt nach DATEN (0901) zurück. Die Erkennung ob es sich um den letzten Zyklus einer Operation --- oder um eine einzyklische Operation --- handelt kann über das Signal FINISH (0916) von der SM-UNIT abgefragt werden. Dieses ist aktiv, wenn der letzte --- oder einzige --- Zyklus stattfindet. Der SM-UNIT wird der Zustand der SYNC-UNIT über RUN (0917) signallisiert. RUN ist im Falle, daß eine Operation stattfindet aktiv andernfalls inaktiv. Der Mechanismus des STOP-Eintrages im F-PLUREG und des daraus generierten ReConfig ist in Fig. 9 nicht dargestellt, da der Ablauf trivial ist und aus der Beschreibung der SYNC-UNIT hervorgeht.

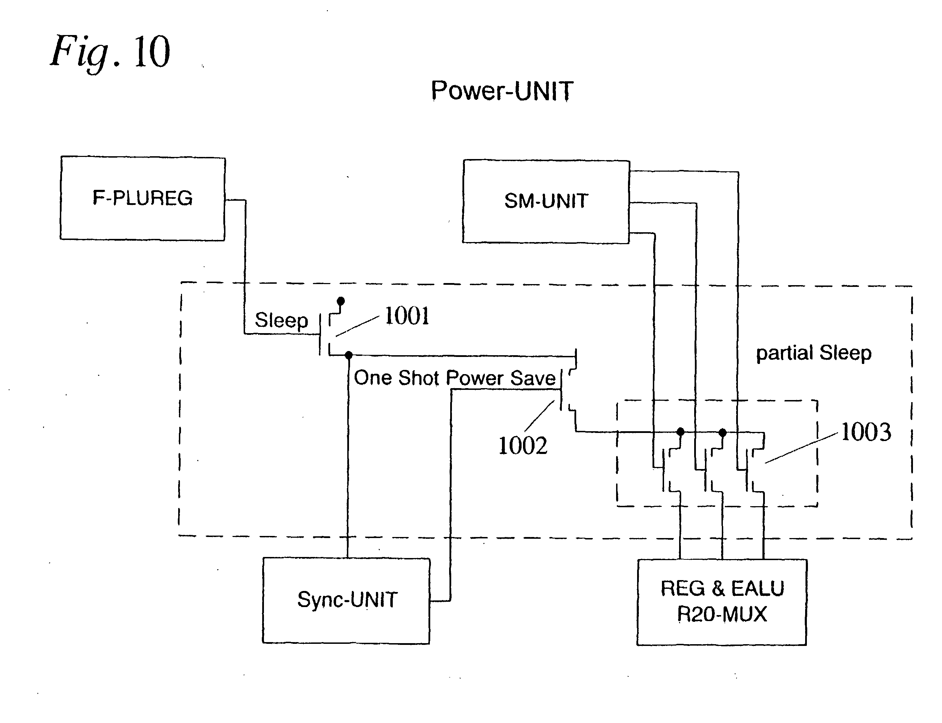

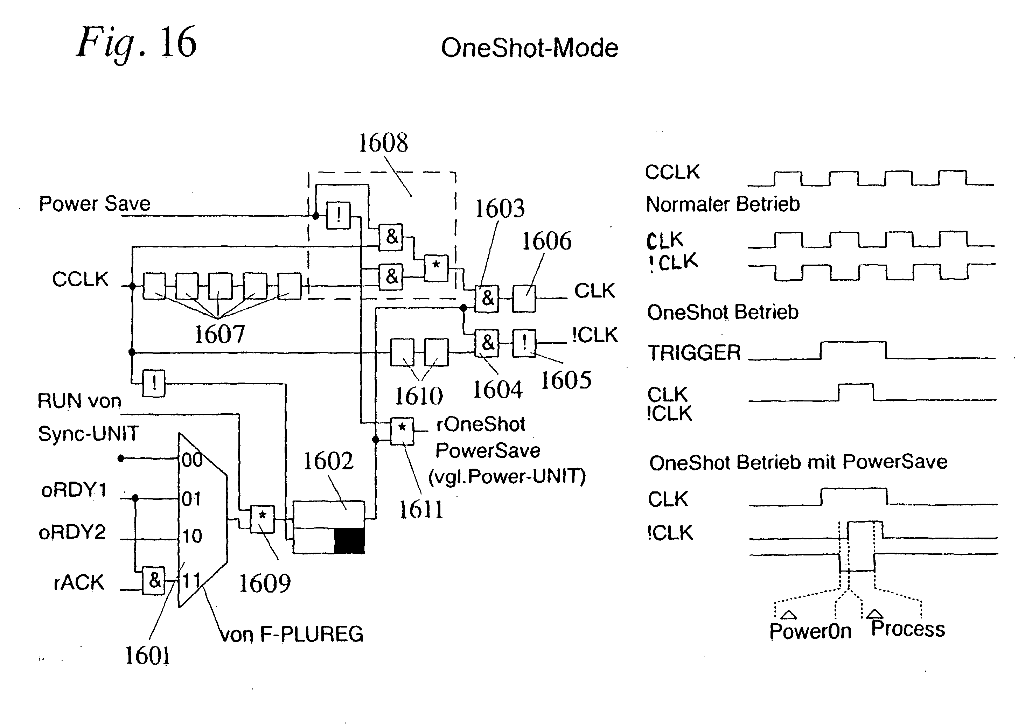

Figur 10 zeigt den prinzipiellen Aufbau der Power-UNIT. Das Signal Sleep wird von F-PLUREG auf einen Transistor oder eine Transistorstufe (1001) geleitet. Diese steuert die Spannungsversorgung für alle abschaltbaren Zellfunktionen. Die Sync-UNIT liefert das OneShotPowerSave-Signal (vgl. Figur 16), über welches die Spannungsversorgung der restlichen Zellfunktionen durch einen Transistor oder eine Transistorstufe (1002) freigegeben wird. Abhängig von den tatsächlich verwendeten Funktionen in der Zelle, schalten die Transitoren oder Transistorstufen (1003) die nicht benötigten Funktionen ab (PowerDown). Verständlich ist, daß für ordentliche Spannungsversorgung und EMV-Verhalten weitere entsprechende Vorkehrungen, wie Kondensatoren etc., getroffen werden müssen.

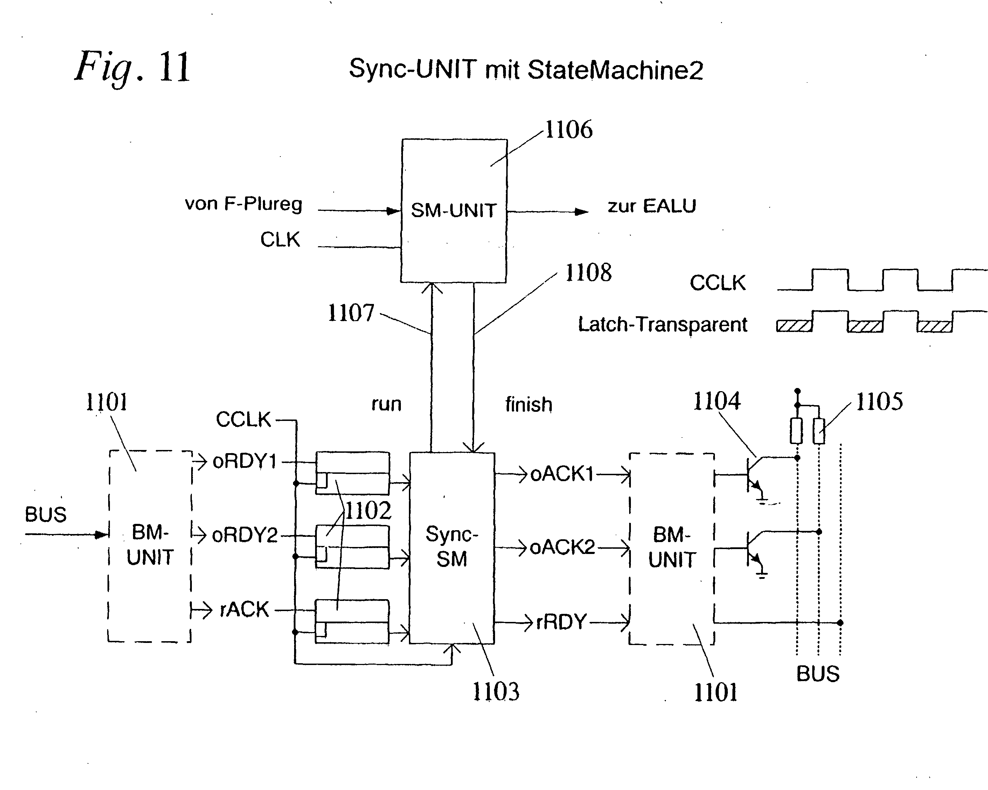

Figur 11 zeigt die Implementierung der Maschine aus Figur 9 in das Konzept. Über die BM-UNIT (1101) werden die Signale oRDY(1/2) und rACK (vereinfacht dargestellt: tatsächlich existiert rACKh und rACKl, rACK = rACKl & rACKh) zu den CCLK-gesteuerten Latches (1102) geschaltet. Dabei sind die Latch so geschaltet, daß sie in der L-Phase (Busphase) von CCLK transparent sind und in der H-Phase (Verarbeitungsphase) den Zustand halten. Die Ausgänge der Latch stellen die Signale für die Sync-StateMachine (1103) zur Verfügung. rRDY (vereinfacht dargestellt: tatsächlich existiert rRDYh und rRDYl, diese sind vollkommen gleich, werden jedoch an verschiedene Empfänger geleitet) von 1103 wird über Tor auf den Bus geschaltet. Die Signale oACK(1/2) von 1103 werden in der BM-UNIT (1101) negiert und an die wiederum invertierenden Open-Kollektor-Bustreiber (1104) geliefert. Der Bus wird über Widerstände (1105) auf H gezogen. Die BM-UNIT ist dabei geschaltet, daß folgende Fälle eintreten:
1. Wird der entsprechende Bus von der BM-UNIT nicht angesteuert, liegt an der Basis der Transistoren (1104) L an. Dadurch belasten sie den Bus nicht.
2. Wird der entsprechende Bus von der BM-UNIT angesteuert, und das Signal nicht quittiert, liegt an der Basis der Transistoren (1104) H an. Das bedeutet, daß der Bus auf L gezogen wird. Wird ein Ergebnis per Broadcasting an mehrere Datenempfänger verteilt, so ziehen alle. PAEs, die die Ergebnisdaten noch nicht quittiert haben und Warte-Zyklen benötigen, den Bus auf L.
3. Wird der entsprechende Bus von der BM-UNIT angesteuert, und das Signal quittiert, liegt an der Basis der Transistoren (1104) L an. Das bedeutet, daß der Bus nicht belastet wird. Wird ein Ergebnis per Broadcasting an mehrere Datenempfänger verteilt, so belasten alle PAEs, die die Ergebnisdaten quittiert haben und keine Warte-Zyklen benötigen, den Bus nicht.

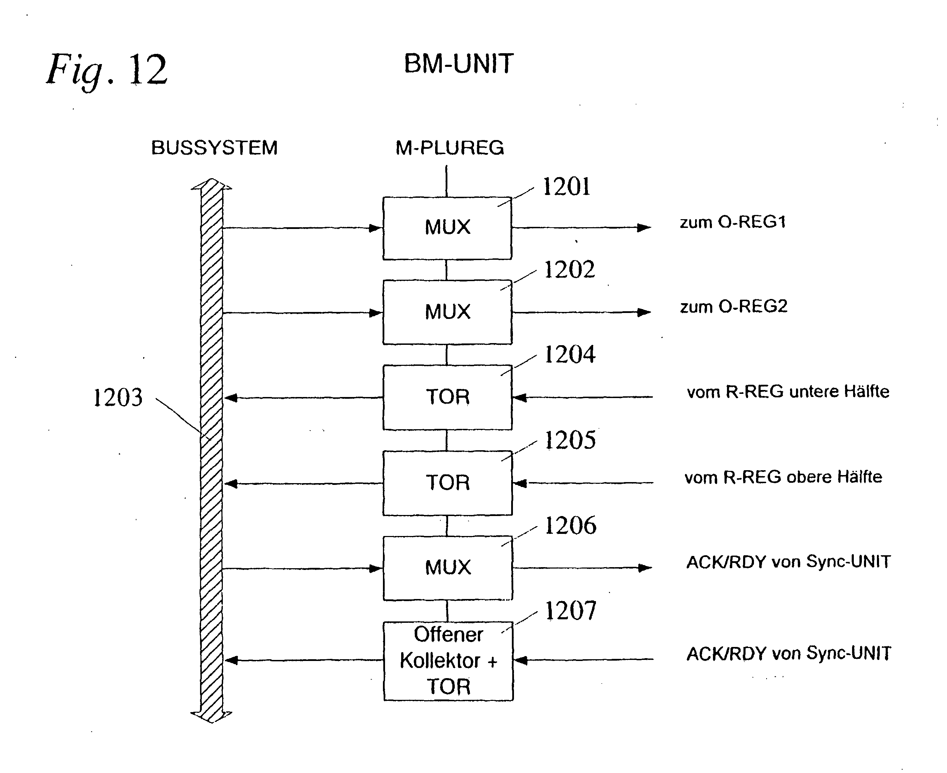

Da der Bus in seinem Grundzustand den H-Pegel, also die Quittierung, einnimmt, übersteuert die Nichtquittierung gemäß Fall 2 die Quittierung, in dem sie den Bus auf L zieht. Dabei geht. der Bus erst dann in den H-Pegel, also in den Quittierungszustand, wenn alle PAEs quittieren. Es ist somit eine Wired-AND-Schaltung realisiert. Die Sync-StateMachine stellt das Signal RUN (1107) der SM-UNIT (1106) zur Verfügung. Diese läuft aufgrund von RUN an. Befindet sich die SM-UNIT im letzten --- oder einzigen --- ZYklus einer Verarbeitung, so signalisiert sie dies über FINISH (1108) an die Sync-StateMachine. FINISH wird in den Auswerteeinheiten zur Erkennung des letzten Zyklusses (0907, 0915) ausgewertet. Die SM-UNIT läuft synchron zum PAE-internen Takt CLK. Figur 12 zeigt den Aufbau der BM-UNIT. Abhängig von den Einträgen in das M-PLUREG schalten die Multiplexer (1201, 1202) die Operanden vom internen Bus (1203) zu den O-REG. Ebenfalls schalten die Tore (1204, 1205) die untere und obere Hälfte des Ergebnisses auf den Bus. Der Multiplexer 1206 schaltet die oRDY(1/2) gemäß der Stellung von 1201 und 1202 und rACK gemäß der Stellung von 1204 und 1205 vom Bus in die PAE. Dabei werden die rACK beider Datenempfänger miteinander verUNDet. Existiert nur ein Datenempfänger, so ist der Multiplexer so geschaltet, daß er statt des fehlenden rACK eine logische 1 zurückgibt. 1207 beinhaltet ein Gate zum Aufschalten der Signale oACK(1/2) und rRDY auf den Bus. Dabei werden die Signale oACK(1/2) zunächst invertiert und dann über Open-Kollektor-Treiber (1104) auf den Bus geschaltet.

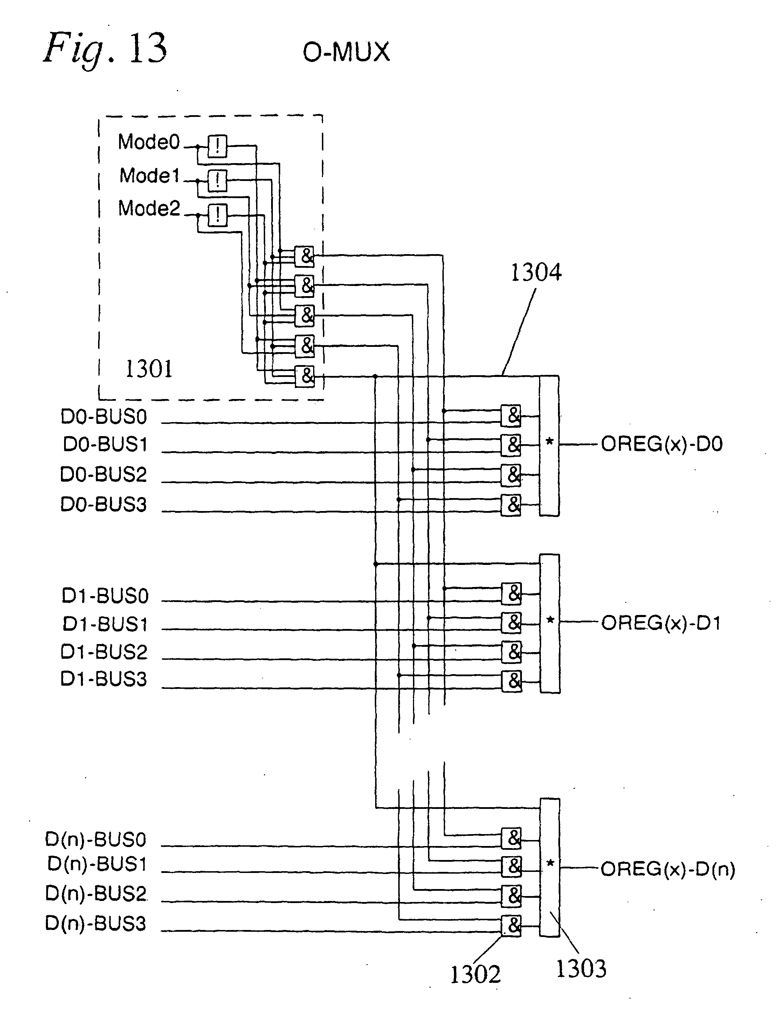

Figur 13 verdeutlicht den Aufbau eines O-MUX. Dabei existiert ein 3:5 Dekoder (1301) zum Auswerten der Mode2..0 Signale aus dem M-PLUREG. Der Multiplexer ist über UND-Gatter (1302) mit nachgeschaltetem ODER-Gatter (1303) aufgebaut. Das Auswertesignal von Mode2..0 = 000 des Dekoders (1301) ist dabei direkt auf die ODER-Gatter geschaltet (1304). Das bewirkt, daß in offenem Zustand, d.h. keine Verbindung zu einem Bussystem, immer logisch 1 zurückgeliefert wird. (Vgl. mit Figur 12 rACK). Zur Vereinfachung ist nur eine reduzierte Busgröße dargestellt.

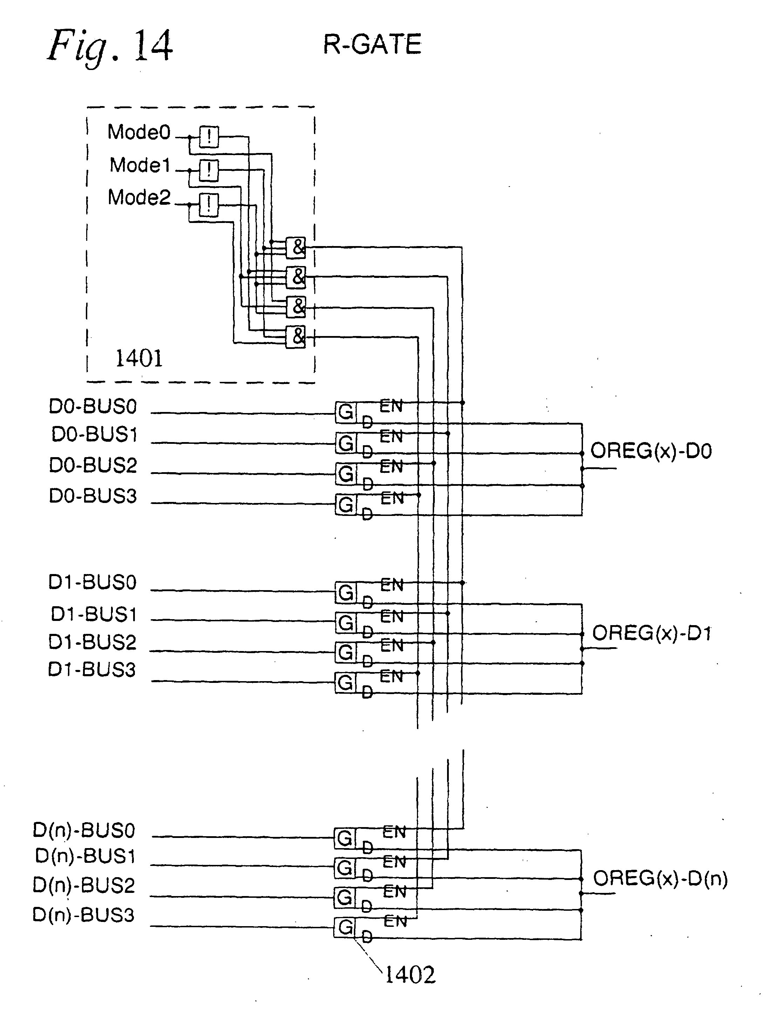

In Figur 14 ist der Aufbau eines R-GATE dargestellt. Dabei existiert ein 3:4 Dekoder (1401) zum Auswerten der Mode2..0 Signale aus dem M-PLUREG. Das Auswertesignal von Mode2..0 = 000 des Dekoders wird nicht verwendet. Dadurch wird keine Busverbindung bei dieser Bit-Kombination hergestellt. Die Gates (1402) sind entweder durch UND-Gatter oder Transmisson-Gates (vgl. 0701) aufgebaut. Dabei ist eine Verstärkerstufe zum Treiben der Buslast vor- oder nachgeschaltet. Zur Vereinfachung ist nur eine reduzierte Busgröße dargestellt.

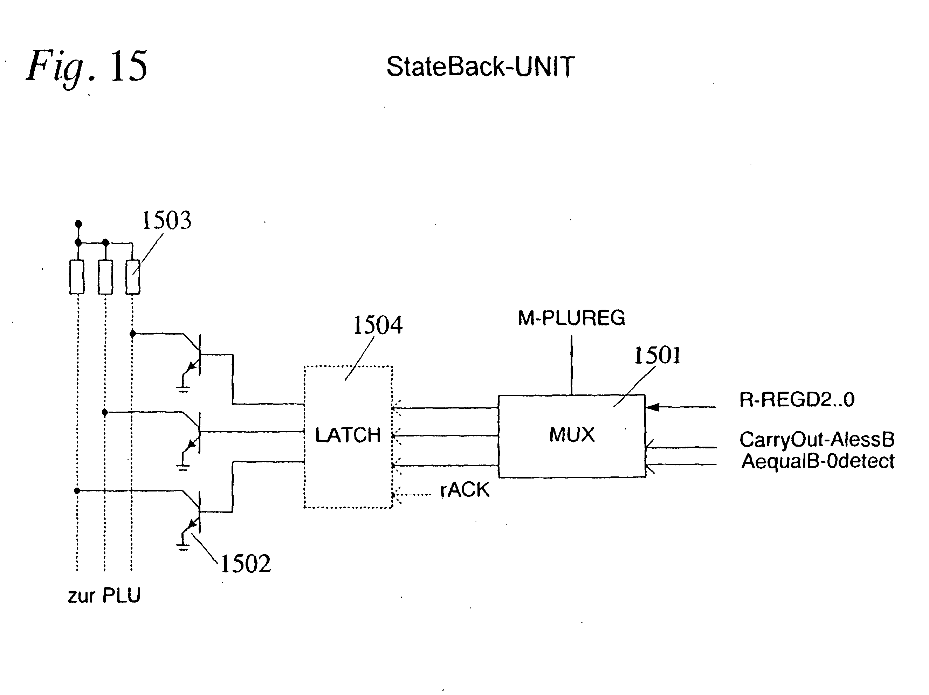

Die StateBack-UNIT ist in Figur 15 dargestellt. Gemäß der Einstellung im M-PLUREG schaltet ein Multiplexer (1501) entweder die Signale CarryOut-AlessB, AequalB-Odetect von der EALU oder die Ausgänge des R-REG R-REGD2..0 durch. Die Signale gelangen an eine Open-Kollektor-Transistor-Stufe (1502) und werden auf den PLU-Bus geschaltet. Dabei benötigt der PLU-Bus externe, nahe der PLU positionierte Pull-Up-Widerstände (1503). Das Latch 1504 ist optional. Wird es in die Ausgangssignale von 1501 eingeschleift, werden diese erst auf den Bus (1503) geschaltet, nachdem der Datenempfänger die Daten über rACK quittiert hat. Dadurch wird bewirkt, daß die Bereitschaft zur Umkonfigurierung über die Statussignale erst angezeigt wird, wenn die Daten auch angenommen wurden. Normalerweise wird dies durch das Zusammenspiel von STOP und ReConfig in der Sync-UNIT geregelt; daher ist das Latch optional. Das rACK wird dabei als Latch-Takt verwendet. Dabei ist das Latch bei rACK=1 transparent und speichert bei rACK=0.

Figur 16 verdeutlicht die Funktionsweise des OneShot-MODE. Über einen Multiplexer (1601) schalten die Signale
1. Vcc
2. oRDY1
3. oRDY2
4. (oRDY1 & rACK)
abhängig von der Einstellung im F-PLUREG den Zell-Takt frei. Dabei. bewirkt die Freischaltung über Vcc, daß der Takt immer läuft (siehe Timing-Diagramm "Normaler Betrieb").

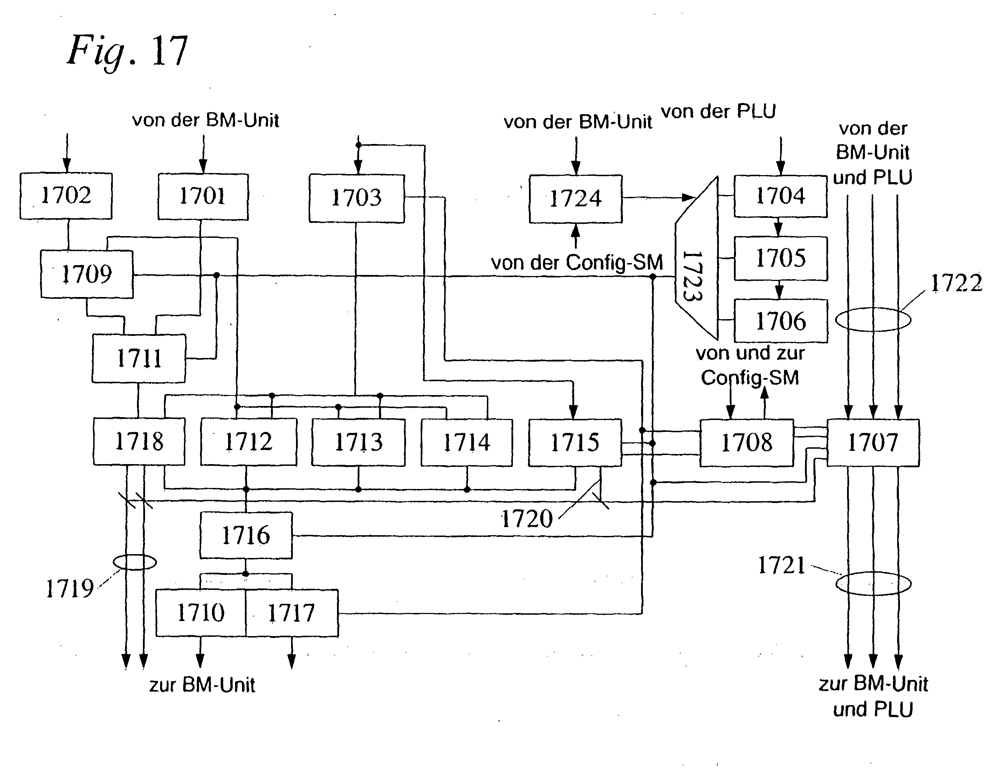

In den 3 übrigen Modi läuft der Takt erst an, wenn die Signale, oder Signalkombinationen den Takt freigeben. Die Freigabe wird durch ein Latch (1602) auf den Takt CCLK synchronisiert, damit die Phase nicht vorzeitig abbricht, wenn das Freigabesignal zu kurz ist. Dabei ist das Latch in der L-Phase von CCLK transparent und halt den Wert in der H-Phase. Das Freigabesignal gelangt auf das UND-Gatter-Paar (1603 und 1604), das den Takt freigibt. über einen Inverter (1605) wird das invertierte Taktsignal !CLK erzeugt, CLK läuft um die Phasengleichheit zu gewährleisten durch ein Verzögerungsglied (1606) (siehe Timing-Diagramm "One-Shot Betrieb"). Dabei wird CCLK in der Zuleitung zu 1604 über zwei Verzögerungszeitungen (1610) verzögert um Phasengleichheit zum an 1603 anliegenden CCLK, das durch den Multiplexer (1608) verzögert wurde, zu gewährleisten. Wird eine PAE in den PowerSave-Mode gebracht, wird die Versorgungsspannung der Zelle weitgehend ausgeschaltet. Dies geschieht über das ODER-Gatter 1611. Ist der PowerSave-MODE eingeschaltet, d.h. PowerSave=1, führt das negierte Signal L. Ist zudem der OneShot-MODE eingeschaltet und das Register 1602 auf L, wird über das OneShotPowerSave-Signal der Spannungsversorgungstransistor in der Power-UNIT (vgl. Figur 17) abgeschaltet. Steht das Register 1602 jedoch auf logisch 1 (oder PowerSave=0), wird der Spannungsversorgungstransistor über 1611 eingeschaltet. Die folgende Tabelle gibt einen Überblick über die Funktion:

| PowerSave | Latch (1602) | Spannung | Bemerkung |
|---|---|---|---|
| L | X | an | |
| H | L | aus | nur wenn OneShot- MODE gesetzt! |
| H | H | an | |

Beim Einschalten der Versorgungsspannung entsteht eine zeitlich bestimmte Aufwachzeit, bis die Zelle arbeitsfähig ist. Um dennoch ordentlich zu funktionieren, müssen die Signale entsprechend verzögert werden. Hierzu wird CCLK über eine Verzögerungsleitung (1607) geleitet. Ein Multiplexer (1608) wählt entsprechend dem Signal PowerSave aus F-PLUREG aus, ob der normale oder verzögerte Takt an die Zelle geleitet wird. Verzögert wird nur der nicht invertierte Takt um den Zeitraum $\Delta$PowerOn, der invertierte Takt wird nicht verzögert. Dadurch steht das Ergebnis synchron zu den restlichen Bausteinfunktionen zur Verfügung. Dadurch verringert sich die nutzbare Verarbeitungszeit auf Δprocess. Die maximale Taktfrequenz des Bausteines hängt somit von ΔPowerOn + Δprocess ab. (siehe Timing-Diagramm "One-Shot Betrieb mit PowerSave").

Figur 17 zeigt ein Implementierungsbeispiel einer PAE. Dabei ist die BM-Unit, die Power-Unit, die StateBack-Unit, der PLU-Bus und das M-PLUREG nicht dargestellt.

Die PAE besitzt drei Eingangsregister oREG1 (1701), oREG2 (1702), oREG3 (1703) für die zu verarbeitenden Daten. Ihre Daten erhalten die Eingangsregister über die BM-Unit von vorangehenden PAE's. Alle Eingangsregister sind Register ohne Schiebefunktion.

Die F-PLUREG (1704, 1705, 1706) bestimmen eine Mehrzahl von Konfigurationen der PAE. Sie werden von der PLU über den PLU-Bus geladen. In ihnen ist jeweils eine Konfiguration gespeichert, die über den Multiplexer (1723) ausgewählt werden. Der Multiplexer (1723) wird vom Register (1724) angesteuert. Das Register (1724) bekommt Daten oder Trigger von einer vorangehender. PAE durch die BM-Unit. Diese PAE ist nicht mit den PAE's, welche die Daten für die Eingangsregister liefern, identisch. Es sind selbstverständlich auch eine größere oder kleinere Anzahl an F-PLUREG denkbar.

Das dritte Eingangsregister oREG3 (1703) liefert den Operanden für eine Multiply-Add Funktion. Dabei wird der Inhalt des oREG1 (1701) mit dem Inhalt des oREG2 (1702) im Multiplizierer (1709) multipliziert und anschließend der Inhalt des oREG3 (1703) in Addierer/Vergleicher (1718) hinzuaddiert. Der Addierer/Vergleicher ist dabei so konfiguriert, daß er eine Addition durchführt. Soll nur eine Multiplikation durchgeführt werden, wird das oREG3 (1703) mit dem Wert Null geladen. Soll nur eine Addition durchgeführt werden, so schaltet das F-PLUREG den Multiplexer (1711) um. Damit gelangt der Wert des oREG1 (1701) direkt zum Addierer/Vergleicher (1718). Die zweite Funktion des Addierer/Vergleicher (1718) nimmt den Wert des oREG1 (1701) und den Wert des oREG3 (1703) und vergleicht beide Werte. Die Ausgangssignale CarryOut-AlessB und AequalB-Odetect (1719) zeigen an, ob die beiden Werte gleich oder der Wert des oREG3 (1703) größer oder kleiner ist als der Wert des oREG1 (1701).

Weitere in der PAE realisierte Funktionen sind ein Schieberegister (1712), ein Dividierer (1713), logische Funktionen (1714) wie UND, OR, NOT, sowie ein Zähler (1715). Der Zähler (1715) erzeugt ein Triggersignal (1720) sobald er von einem vorgegebenen Wert auf Null gezählt hat. Geladen wird der Zähler (1715) direkt mit dem Wert, den auch das oREG3 (1703) erhält. Es ist auch denkbar andere Zähler einzusetzen, wie Aufwärtszähler, die von Null auf einen geladenen Wert zählen und dann ein Triggersignal generieren. Die Ergebnisse der Funktionseinheiten werden durch den Multiplexer (1716) an die beiden Ausgangsregister rREG1 (1710) und rREG2 (1717) weitergeleitet, die mit der BM-Unit in Verbindung stehen und so die Daten an nachfolgende PAE's weitergeben. Gesteuert wird der Ablauf von einer Sync-Unic (1708), die mit der Trigger-Logik (1707) verbunden ist. Außerdem tauscht sie mit der Config-State-Machine Steuersignale aus, die den korrekten Ablauf bei einer Änderung der Konfiguration durch den Multiplexer (1723) gewährleisten. Die Trigger-Logik (1707) steht mit dem F-PLUREG in Verbindung und wertet die eingehenden Signale (1722), abhängig von der in den F-PLUREG gespeicherten Konfiguration aus. Die eingehenden Signale umfassen das ReConfig, das generelle Triggersignal, sowie die Handshake-Signale oRDY und rACK. Abhängig von der Konfiguration gibt die Trigger-Logik (1707) die Handshake-Signale an die Sync-Unit (1708) weiter, die wiederum die Enable-Signale für die Eingangs-, Ausgangsregister und den Zähler generiert. Außerdem erzeugt die Sync-Unit (1708) die ausgehenden Handshake-Signale oACK und rRDY, die sie zur Trigger-Logik (1707) weitergibt. Abhängig von der Konfiguration können die Signale (1719) oder der Trigger des Zählers (1720) als generelles Trigger-Signal verwendet und zur Trigger-Logik (1707) geleitet werden. Von der Trigger-Logik (1707) ausgehend sind die Signale (1721) ReConfig, Handshake oRDY und rACK und das generelle Triggersignal, die wiederum zur BM-Unit geleitet werden.

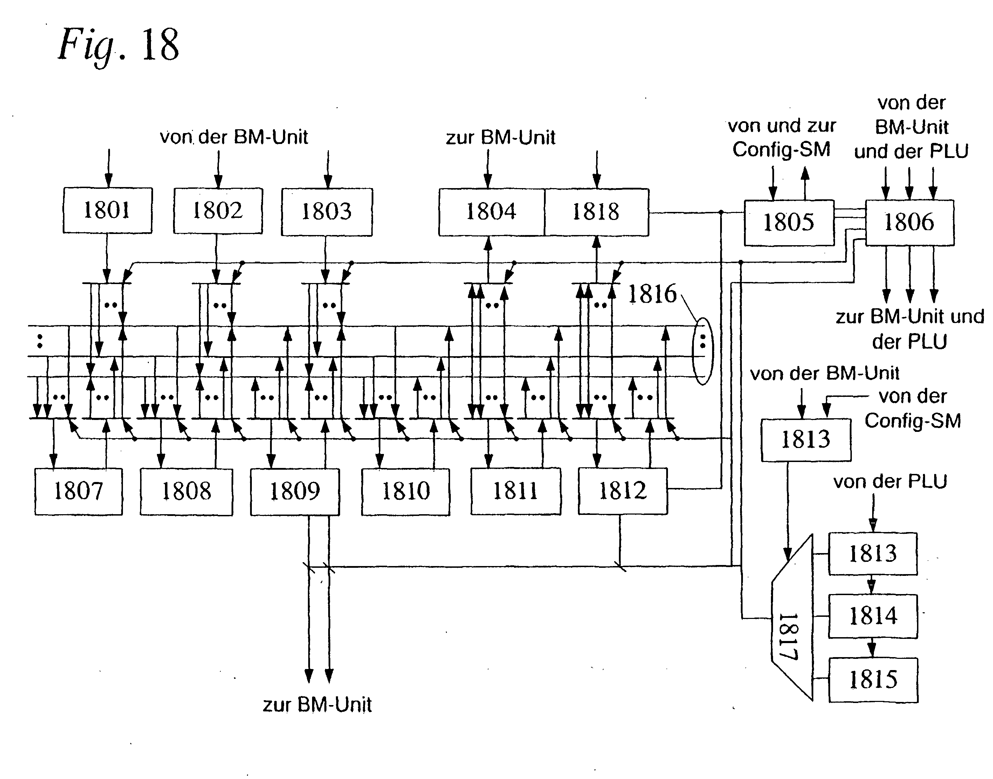

Figur 18 zeigt eine PAE mit dem gleichen Funktionsumfang die in Figur 17 beschriebenen PAE. Auch hierbei wurde auf die Darstellung der BM-Unit, der Power-Unit, der StateBack-Unit und der M-PLUREG verzichtet. Sie besteht aus drei Eingangsreoistern oREG1 (1801), oREG2 (1802), oREG3 (1803), zwei Ausgangsregistern rREG1 (1804), rREG2 (1818), drei F-PLUREG (1813, 1814, 1815), einem Multiplexer (1818) einer Sync-Unit (1805) und einer Trigger-Logik (1806). Die Funktionseinheiten sind ein Dividierer (1807), ein Multiplizierer (1817), ein Addierer/Vergleicher (1809), Logikfunktionen (1810), ein Schieberegister (1811) und einem Zähler (1812). Die Funktion der einzelnen Einheiten entspricht der in Figur 17 geschriebenen. Es ist auch denkbar weitere Funktionen in der PAE zu integrieren wie z.B. die Trigonometrischen Funktionen, Wurzel- und Exponentialfunktion. Dies gilt selbstverständlich auch für die in Figur 17 beschriebene PAE. Die einzelnen Funktionen sind als Integer oder Floating-Point Einheiten realisierbar. Im Unterschied zur PAE in Figur 17 sind die einzelnen Funktionseinheiten über ein Bussystem (1816) gekoppelt, so daß die einzelnen Funktionen in beliebiger Reihenfolge miteinander verbunden werden können. Die Verschaltung wird durch die Konfiguration bestimmt, die in den F-PLUREG abgelegt ist. Das Bussystem (1816) kann auf verschiedene Weise aufgebaut werden. Möglich sind ein oder mehrere segmentierte Busse, deren Segmente jeweils zwei miteinander verschaltete Funktionen verbindet oder eine Anzahl durchgehender Busse, die jeweils zwei Funktionseinheiten miteinander verschalten. Weiterhin besteht die Möglichkeit,-daß die einzelnen Funktionseinheiten und Register eine Ziel-Addresse abschicken, mit deren Hilfe eine Verbindung aufgebaut wird.

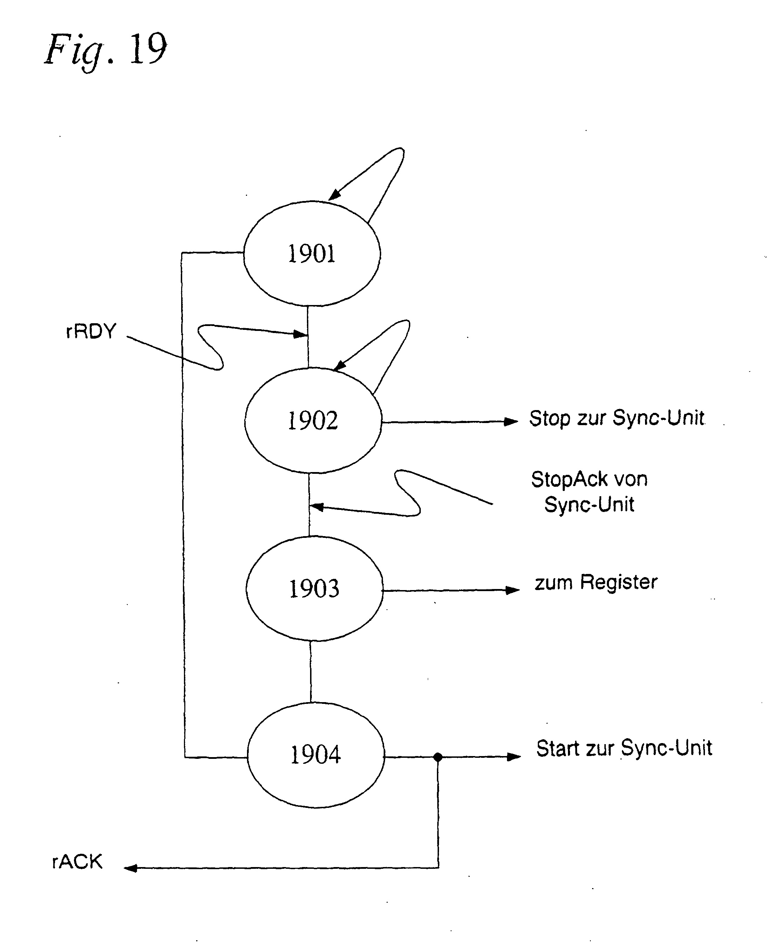

Figur 19 zeigt eine Config-State-Machine, die die Konfigurationsregister verwaltet. Zu Beginn befindet sich die Config-State-Machine im Zustand IDLE (1901). Dieser Zustand wird erst verlassen, nachdem ein rRDY Signal der Config-PAE eintrifft, die das Konfiguraticnsregister auswählt. Danach geht die Config-State-Machine in den Stop-Zustand (1902) über und sendet ein Stop-Signal an die Sync-Unit der PAE. Die PAE beendet ihre Operation zum nächst möglichen Zeitpunkt und sendet einen Stop-Acknowledge zur Config-State-Machine. Diese geht in den Zustand Reload (1903) über und sendet ein Enable-Signal zum Register der Config-PAE. Danach wechselt die Config-State-Machine in den Zustand Restart (1904), sendet ein Start-Signal zur Sync-Unit, die ihre Verarbeitung wieder aufnimmt. Gleichzeitig schickt sie ein rACK Signal zu der Config-PAE. Abschließend springt die Config-State-Nachine wieder in den IDLE Zustand (1901).

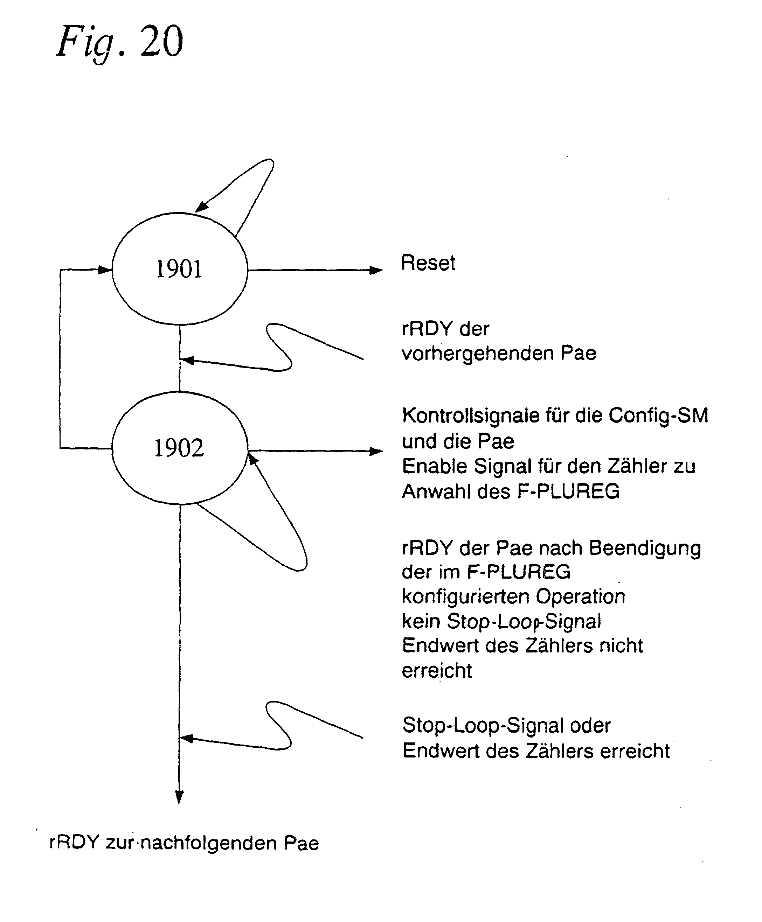

Figur 20 stellt eine State-Machine zum automatischen Durchlauf der verschiedenen Konfigurationen der PAE dar, die im Folgenden Loop-State-Machine genannt wird. Da mehrere F-PLUREG vorhanden sind, ist es u.U. sinnvoll mehrere Operationen nacheinander durchzuführen und erst anschließend die Daten, sowie die Triggersignale und Handshake-Signale zur nachfolgenden PAE weiterzugeben. Das Ergebnis der einzelnen Operationen wird vom rREG der PAE über die bereits beschriebene Rückkopplung zu den Eingangsregistern zurückgeführt. Dieser Vorgang kann über ein von einem externen Stop-Loop-Signal oder einem internen Zähler gesteuert werden. Zu Beginn befindet sich die Loop-State-Machine im IDLE Zustand (2001). Im IDLE-Zustand (2001) gibt die Loop-State-Machine ein Reset-Signal an einen Zähler. Dieser Zähler dient zur Anwahl des F-PLUREG. Nach dem rRDY der vorangehenden PAE geht die Loop-State-Machine in den Konfigurationszustand (2002) über. Dabei erzeugt sie die Handshake-Signale für die PAE und die Kontrollsignale für die Config-State-Machine. Außerdem wird ein Enable-Signal für den Zähler erzeugt, dessen Wert um Eins erhöht wird. Bekommt die Loop-State-Machine nun kein Stop-Loop-Signal oder hat der interne Zähler der PAE noch nicht seinen Endwert erreicht, verbleibt sie im Konfigurationszustand (2002) und der zuvor beschriebene Ablauf wiederholt sich. Beim Eintreffen eines Stop-Loop-Signals oder wenn der interne Zähler der PAE seinen Endwert erreicht hat, kehrt die State-Machine in den IDLE-Zustand (2001) zurück und das *rRDY* Signal wird zur nachfolgenden PAE geleitet.

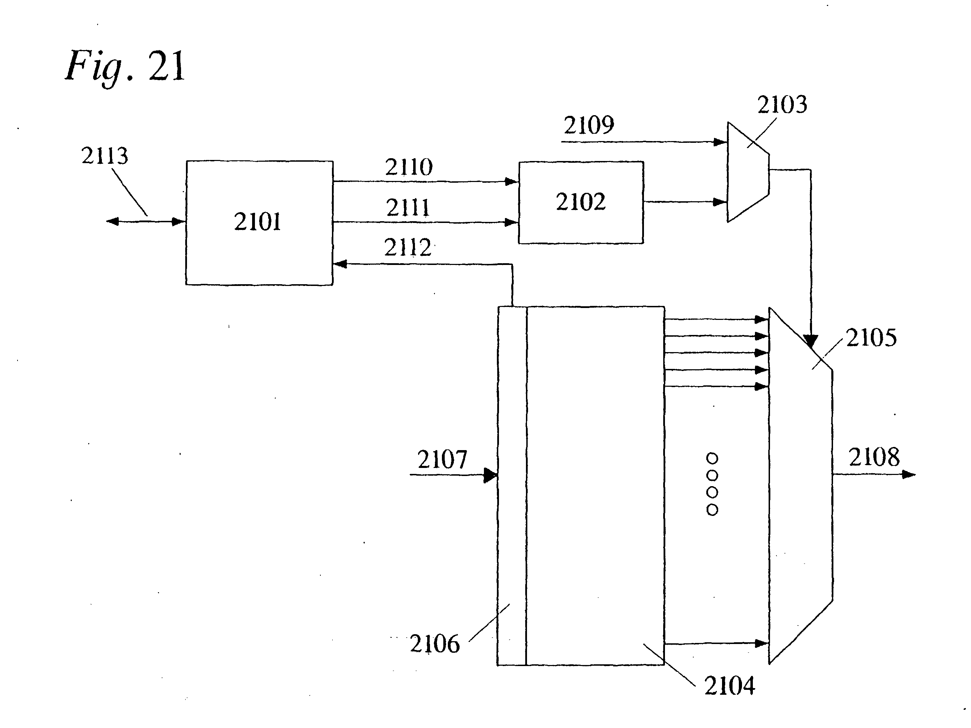

Figur 21 zeigt den für den sequentiellen Durchlauf, der in den F-PLUREG gespeicherten Konfigurationen benötigten Teil der PAE.
Die F-PLUREG (2104) erhalten ihre Daten von der PLU (2107) und sind gegenüber den zuvor beschriebenen Ausführungen etwas modifiziert. Jedes F-PLUREG enthält ein zusätzliches Bit, das sogenannte Loop-Bit (2106). Dieses Loop-Bit wird zur in Figur 20 beschriebenen Loop-State-Machine (2101) durch die Verbindung (2112) zurückgeführt . Es dient dort als Stop-Loop Signal, das heißt bei gesetztem Loop-Bit (2106) wird der Loop-Vorgang beendet, ansonsten wird er fortgeführt bis das Loop-Bit gesetzt wird oder der in Figur 20 beschriebene interne Zähler der Loop-State Machine (2101) seiner. Endwert erreicht hat. Die Loop-State-Machine (2101) steuert den Zahler (2102) an, dessen Wert die Selektion des F-PLUREG (2104) durch den Multiplexer (2105) steuert. Die Kontrollsignale der Config-State-Machine und die Handshake-Signale der PAE werden durch die Verbindung (2113) ubertragen. Die Konfigurationsdaten der F-PLUREG werden über die Verbindung (2108) zu den Funktionseinheiten der PAE weitergegeben. Der Zähler (2102) erhält ein Enable-Signal (2110), so daß der Wert des Zählers (2102) um Eins erhöht wird. Außerdem gibt die Loop-State-Machine (2101) sobald ein Loop- Vorgang beendet ist, ein Reset-Signal (2111) an den Zähler. Über den Multiplexer (2103) kann zwischen Loop-Mode und dem normalen Ablauf in der PAE ausgewählt werden. Beim normalen Ablauf gibt der Multiplexer (2103) ein Datum (2109) zur Auswahl eines F-PLUREG (2104) an den Multiplexer (2105) weiter.

### 5 Begriffsdefinition

- **Aequa1B-0detect**: Durch die EALU generiertes Signal, das bei arithmetischen Operationen anzeigt, daß das Ergebnis gleich null ist. Bei Vergleichen wird angezeigt, daß Operand A gleich Operand B ist.
- **ALU**: Arithmetisch logische Einheit. Grundeinheit zum Verarbeiten von Daten. Die Einheit kann arithmetische Operationen wie Addition, Subtraktion, unter Umständen auch Multiplikation, Division, Reihenentwicklungen usw, durchführen. Dabei kann die Einheit als ganzzahlige (integer) Einheit oder als Fließkomma-(floating-point)-Einheit gestaltet sein. Ebenfalls kann die Einheit logische Operationen, wie UND, ODER, sowie Vergleiche durchführen.
- **BM-UNIT**: Einheit zum Aufschalten der Daten auf die Bussysteme außerhalb der PAE. Das Aufschalten geschieht über Multiplexer für die Dateneingänge und Tore für die Datenausgänge, oACKLeitungen sind als Open-Kollektor-Treiber implementiert. Die BM-UNIT wird durch das M-PLUREG gesteuert.
- **Broadcast**: Senden von Daten einer PAE an mehrere Datenempfänger.
- **CarryOut-AlessB**: Durch die EALU generiertes Signal, das bei arithmetischen Operationen einen Übertrag anzeigt. Bei Vergleichen wird angezeigt, daß Operand A kleiner als Operand B ist.
- **Datenempfänger**: Die Einheit(en), die Ergebnisse der PAE weiterverarbeitet/arbeiten
- **Datensender**: Die Einheit(en), die Daten für die PAE als Operanden zur Verfügung stellt/stellen
- **D-FlipFlop**: Speicherelement, welches ein Signal bei der steigenden Flanke eines Taktes speichert.
- **EALU**: Erweiterte arithmetisch logische Einheit. ALU, die um Sonderfunktionen, die zum Betrieb einer Dalenverarbeitungseinrichtung gemäß DE 441 16 881 A1 benötigt werden oder sinnvoll sind erweitert wurde. Dies sind ins besondere Zähler.
- **FPGA**: Programmierbarer Logikbaustein. Stand der Technik.
- **F-PLUREG**: Register in dem die Funktion der PAE gesetzt wird. Ebenfalls wird der OneShot- und Sleep-Mode gesetzt. Das Register wird von der PLU beschrieben.
- **Gatter**: Gruppe von Transistoren, die eine logische Grundfunktion durchführen. Grundfunktionen sind z.B. NAND, NOR, Transmission-Gates.
- **H-Pegel**: Logisch 1 Pegel, abhängig von der verwendeten Technologie
- **Handshake**: Signalprotokoll, bei dem ein Signal A einen Zustand anzeigt und ein anderes Signal B bestätigt, daß es Signal A akzeptiert und darauf reagiert (hat).
- **Konfigurieren**: Bestimmen der Funktion und Vernetzung einer logischen Einheit, einer (FPGA)-Zelle oder einer PAE (vgl. umkonfigurieren).
- **Latch**: Speicherelement, das ein Signal für gewöhnlich während des H-Pegels transparent weiterleitet und während des L-Pegels speichert. In PAEs werden teilweise Latches gebraucht, bei denen die Funktion der Pegel genau umgekehrt ist. Hierbei wird vor den Takt eines üblichen Latch ein Inverter geschaltet.
- **L-Pegel**: Logisch 0 Pegel, abhängig von der verwendeten Technologie
- **M-PLUREG**: Register in dem die Vernetzung der PAE gesetzt wird. Das Register wird von der PLU beschrieben.
- **Next-Neighbour Vernetzung**: Vernetzung der Bussysteme mit den an den Kanten anstoßenden Nachbarn.
- **O-MUX**: Multiplexer innerhalb der BM-UNIT, der das Bussystern der Operanden auswählt.
- **OneShot**: Modus in dem eine PAE mit einem geringerem als dem Prozessortakt arbeitet. Der Takt ist synchron zum Prozessortakt und entspricht einer Periode. Eine Phasenverschiebung existiert nicht. Der Takt wird über eines der Signale oRDY(1/2) oder rRDY freigegeben. Dieser Modus dient der Stromeinsparung, wenn die Datensender oder -empfänger langsamer als der Prozessortakt Daten senden oder empfangen.
- **Open-Kollektor**: Schaltungstechnik, bei der der Kollektor eines Transistors an einem, über einen Puilup auf den H-Pegel gezogenen, Bussignal liegt. Der Emitter der Transistors liegt auf Masse. Schaltet der Transistor, so wird das Bussignal auf den L-Pegel gezogen. Vorteil des Verfahrens ist, daß eine Mehrzahl solcher Transistoren den Bus ohne elektrische Kollision steuern können. Dabei sind die Signale ODER-verküpft, es entsteht das sog. wired-OR.
- **O-REG**: Operandenregister zur Speicherung der Operanden der EALU. Ermöglicht die zeitliche und funktionelle Unabhängigkeit der PAE von den Datensendern. Dadurch wird der Transfer der Daten vereinfacht, da er asynchron oder paketorientiert stattfinden kann. Gleichzeitig wird die Möglichkeit geschaffen die Datensender unabhängig von der PAE oder die PAE unabhängig von den Datensendern umzukonfigurieren.
- **O-REGsft**: O-REG mit durch SM-UNIT gesteuertem Schieberegister.
- **PA**: Processing Array: Array aus PAEs
- **PAE**: Processing Array Element: EALU mit O-REG, R-REG, R20MUX, F-PLUREG, M-PLUREG, BM-, SM-, Sync-, StateBackund Power-UNIT.
- **PLU**: Einheit zum Konfigurieren und Umkonfigurieren der PAE. Ausgestaltet durch einen speziell an seine Aufgabe angepaßten Mikrokontroller.
- **PowerSave-MODE**: Stromsparmodus Modus innerhalb des OneShot-MODE. Während keine Operation ausgeführt wird, werden alle Teile der PAE mit Ausnahme des F-, M-PLUREG und Sync-UNIT nicht mit Spannung versorgt.
- **Power-UNIT**: Einheit die die Stromsparfunktionen regelt.
- **PullDown**: Widerstand, der eine Busleitung auf einen L-Pegel zieht.
- **PullUp**: Widerstand, der eine Busleitung auf einen H-Pegel zieht.
- **R-GATE**: Schalter innerhalb der BM-UNIT, der das Ergebnis auf das entsprechende Bussystem aufschaltet. Dabei sind einige Signal über als Open-Kollektor-Treiber aufgeschaltet. Das R-GATE arbeitet als Bustreiber und kann in einen busneutralen Modus gehen.
- **R2O-MUX**: Multiplexer zum Einschleifen des Ergebnisses in einem R-REG-sft in den Datenpfad zwischen O-REG und EALU.
- **R-REGsft**: Ergebnisregister zur Speicherung des Ergebnis der EALU. Ermöglicht die zeitliche und funktionelle Unabhängigkeit der PAE von den Datenempfängern. Dadurch wird der Transfer der Daten vereinfacht, da er asynchron oder paketorientiert stattfinden kann. Gleichzeitig wird die Möglichkeit geschaffen die Datenempfänger unabhängig von der PAE oder die PAE unabhängig von den Datenempfängern umzukonfigurieren. Das Register ist mit einer Schiebfunktion versehen, die von der SM-UNIT gesteuert wird.
- **serielle Operationen**: Operationen, die durch serielles Abarbeiten eines Datenwortes oder eines Algorithmus durchgeführt werden. Serielle Multiplikation, serielle Division, Reihenentwicklung
- **Sleep-MODE**: Stromsparmodus in dem die PAE mit Ausnahme von F-PLU-REG ohne Spannung ist.
- **SM-UNIT**: StateMachine-UNIT. Zustandsmaschine, die die EALU steuert.
- **StateBack-UNIT**: Einheit, die die Rückmeldung der Statussignale an die PLU steuert. Bestehend aus einem Multiplexer und einer Open-Kollektor-Bustreiberstufe
- **Sync-UNIT**: Einheit, die die Synchronisation der PAE mit den Datensendern und -empfängern übernimmt, sowie das Umkonfigurieren von PAEs überwacht. Gleichzeitig werden die OneShotFunktionen übernommen.
- **Tor**: Schalter, der ein Signal weiterleitet oder sperrt. Einfacher Vergleich: Relais
- **Umkonfigurieren**: Neues Konfigurieren von einer beliebigen Menge von PAEs während eine beliebige Restmenge von PAEs ihre eigenen Funktionen fortsetzen (vgl. konfigurieren).
- **Zustandsmaschine**: Logik, die diversen Zuständen annehmen kann. Die Übergänge zwischen den Zuständen sind von verschiedenen Eingangsparametern abhängig. Diese Maschinen werden zur Steuerung komplexer Funktionen eingesetzt und entsprechen dem Stand der Technik

### 6 Konventionen

### 6.1 Namenskonvention

**Baugruppe** -UNIT
**Betriebsart** -MODE
**Multiplexer** -MUX
**Negiertes Signal** not-
**Register für PLU sichtbar** -PLUREG
**Register intern** -REG
**Schieberegisters** -sft

### 6.2 Funktionskonvention

**Schieberegisters sft**

| **UND-Funktion &** | | |
|---|---|---|
| A | B | Q |
| 0 | 0 | 0 |
| 0 | 1 | 0 |
| 1 | 0 | 0 |
| 1 | 1 | 1 |

| **ODER-Funktion #** | | |
|---|---|---|
| A | B | Q |
| 0 | 0 | 0 |
| 0 | 1 | 1 |
| 1 | 0 | 1 |
| 1 | 1 | 1 |

| **NICHT-Funktion !** | |
|---|---|
| A | Q |
| 0 | 1 |
| 1 | 0 |

| TOR-Funktion G | | |
|---|---|---|
| EN | D | Q |
| 0 | 0 | - |
| 0 | 1 | - |
| 1 | 0 | 0 |
| 1 | 1 | 1 |

## Patentansprüche

1. Rekonfigurierbarer Prozessor, insbesondere
CPU,
Datenflußprozessor (DFP),
digitaler Signal-Prozessor (DSP),
systolischer Prozessor und/oder
programmierbarer Logikbaustein (FPGA),
welcher zur Datenverarbeitung von Verarbeitungsdaten eine Mehrzahl konfigurierbarer Zell-Einheiten aufweist, die in Funktion und Vernetzung zur Laufzeit umkonfigurierbar sind,
**dadurch gekennzeichnet, daß**
als konfiqurierbare Zell-Einheiten programmierbare Recheneinheiten mit
einem Rechenwerk zur Durchführung mathematischer und/oder logischer Grundfunktionen, und
einem adressierbaren Funktions- und/oder Vernetzungs-Setzmittel (F-Plureg, M-Plureg), um eine zu konfigurierende Funktion und/oder Vernetzung verarbeitungsdatenbusunabhängig zu setzen,
vorgesehen sind.

2. Prozessor nach dem vorhergehenden Anspruch, **dadurch gekennzeichnet, daß** zur Steuerung der programmierbaren Recheneinheit eine Zustandsmaschine existiert.

3. Prozessor nach dem vorhergehenden Anspruch, **dadurch gekennzeichnet, dass** die Zustandsmaschine konfigurierbar ausgebildet ist.

4. Prozessor nach dem vorhergehenden Anspruch, **dadurch gekennzeichnet, daß** die Zustandsmaschine zur bitweisen, feingranularen Konfiguration ausgebildet ist.

5. Prozessor nach einem der vorhergehenden Ansprüche, **dadurch gekennzeichnet, daß** das Funktions- und Vernetzungs-Setzmittel mit Registern gebildet ist.

6. Prozessor nach einem der vorhergehenden Ansprüche, **dadurch gekennzeichnet, daß** das Funktions- und Vernetzungsmittel zum Setzen der arithmetischen und/oder logischen Funktion des Rechenwerks mittels jeweils weniger Bits grobgranular ausgebildet ist.

7. Prozessor nach einem der vorhergehenden Ansprüche, **dadurch gekennzeichnet, daß** ein Mittel zur Speicherung von Operanden und/oder Ergebnis (O-REG, R-REGsft) vorgesehen ist.

8. Prozessor nach einem der vorhergehenden Ansprüche, **gekennzeichnet durch** eine Buseinheit zum Aufschalten der Daten auf Bussysteme außerhalb der konfigurierbaren Einheiten, wobei die Buseinheit den Abgriff von Daten von einem Bussystem ermöglicht und die Funktions und Vernetzungs-Setzmittel dazu ausgebildet sind, den Buszugriff zu entkoppeln.

9. Prozessor nach einem der vorhergehenden Ansprüche, **dadurch gekennzeichnet, daß** eine Steuerschaltung dazu ausgebildet ist, die Taktung und/oder Spannungsversorgung der Zell-Einheiten (PAE) abzutrennen.

10. Verfahren zum Betrieb einer Prozessoranordnung mit einer Mehrzahl an konfigurierbaren Logikzellen mit programmierbaren Recheneinheiten (EALU) mit einem Rechenwerk zur Durchführung mathematischer und/oder logischer Grundfunktionen, worin eine zu konfigurierende Funktion und Vernetzung in ein adressierbares Funktions und Vernetzungs-Setzmittel (F-Plureg, M-Plureg) verarbeitungsdatenbusunabhängig gesetzt wird.

## Claims

1. Reconfigurable processor, in particular CPU, data flow processor (DFP), digital signal processor (DSP), systolic processor and/or programmable logic module (FPG), which for data processing of processing data has a plurality of configurable cell units which in function and networking can be reconfigured into running time, **characterised in that** as configurable cell units there are provided programmable computing units with a computing unit for carrying out mathematical and/or basic logic functions, and an addressable function and/or networking-setting means (F-Plureg, M-Plureg), in order to set a configuring function and/or networking in such a way that it is independent of data bus processing.

2. Processor according to the preceding claim, **characterised in that** a status machine exists for controlling the programmable computing unit.

3. Processor according to the preceding claim, **characterised in that** the status machine is constructed to be configurable.

4. Processor according to the preceding claim, **characterised in that** the status machine is constructed for bit by bit, fine granular configuration.

5. Processor according to one of the preceding claims, **characterised in that** the function and networking setting means is constructed with registers.

6. Processor according to one of the preceding claims, **characterised in that** the function and networking means for setting the arithmetic and/or logic function of the computing means is constructed to be coarse granular in each case by means of a few bits.

7. Processor according to one of the preceding claims, **characterised in that** a means is provided for storing operands and/or result (O-REG, R-REGsft).

8. Processor according to one of the preceding claims , **characterised by** a bus unit for applying the data to bus systems outside the configurable units, wherein the bus unit enables the pick off of data from a bus system, and the networking and setting means are constructed to decouple the bus access.

9. Processor according to one of the preceding claims, **characterised in that** a control circuit is constructed to sever the timing and/or voltage supply to the cell units (PAE).

10. Method for operating a processor arrangement with a plurality of configurable logic cells with programmable computing units (EALU) with a computing means for carrying out mathematical and/or basic logic functions, wherein a function to be configured and networked is set into an addressable function and networking setting means (F-Plureg, M-Plureg) which is independent of data bus processing.

## Revendications

1. Processeur reconfigurable,
en particulier
unité centrale (CPU),
processeur de flot de données (DFP),
processeur de signaux numériques (DSP),
processeur systolique et/ou
composant logique programmable (FPGA),
présentant plusieurs unités cellulaires configurables pour le traitement de données, dont la fonction et la connexion sont reconfigurables en cours de fonctionnement,
**caractérisé par le fait que**
il est prévu comme unités cellulaires configurables des unités de calcul programmables avec
une unité arithmétique et logique pour l'exécution de fonctions de base mathématiques et/ou logiques et un moyen de réglage de la fonction ou de la connexion (F-Plureg, M-Plureg) pour régler une fonction et/ou une connexion à configurer indépendamment du bus de données de traitement.

2. Processeur selon la revendication précédente, **caractérisé par le fait qu'**il existe une machine d'état pour la commande de l'unité de calcul programmable.

3. Processeur selon la revendication précédente, **caractérisé par le fait que** la machine d'état est programmable.

4. Processeur selon la revendication précédente, **caractérisé par le fait que** la machine d'état est conçue pour la configuration bit par bit, à granularité fine.

5. Processeur selon l'une des revendications précédentes, **caractérisé par le fait que** le moyen de réglage de la fonction et de la connexion est formé de registres.

6. Processeur selon l'une des revendications précédentes, **caractérisé par le fait que** le moyen de réglage de la fonction et de la connexion permettant le réglage de la fonction arithmétique et/ou logique de l'unité arithmétique et logique est conçu au moyen de moins de bits, à granularité grossière.

7. Processeur selon l'une des revendications précédentes, **caractérisé par le fait qu'**il est prévu un moyen de mémorisation d'opérandes et/ou de résultats (O-REG, R-REGsft).

8. Processeur selon l'une des revendications précédentes, **caractérisé par** une unité de bus pour l'application des données sur des systèmes de bus à l'extérieur des unités configurables, l'unité de bus permettant le prélèvement de données d'un système de bus et les moyens de réglage de la fonction et de la connexion étant conçus pour découpler l'accès au bus.

9. Processeur selon l'une des revendications précédentes, **caractérisé par le fait qu'**un circuit de commande est conçu pour séparer le signal d'horloge et/ou la tension d'alimentation des unités cellulaires (PAE).

10. Procédé pour l'exploitation d'un circuit à processeurs comprenant plusieurs cellules logiques configurables à unités de calcul programmables (EALU) avec une unité arithmétique et logique pour l'exécution de fonctions de base mathématiques et/ou logiques, dans laquelle une fonction et ou une connexion à configurer est réglée indépendamment du bus de données de traitement dans un moyen de réglage de la fonction et de la connexion adressable (F-Plureg, M-Plureg).
